# EUROPEAN PATENT APPLICATION

(11) **EP 4 803 349 A1**
(43) Date of publication of application: **09.09.2026**
(21) Application number: 24886224.5
(22) Date of filing: 30.10.2024
(51) Int. Cl.: B60L 53/12, B60L 53/60

(54) **WIRELESS CHARGING CONTROL DEVICE FOR ELECTRIC VEHICLE AND METHOD FOR CONTROLLING WIRELESS CHARGING THEREOF**

(30) Priority: 30.10.2023 KR 20230146532; 23.07.2024 KR 20240096985; 28.10.2024 KR 20240148729; 28.10.2024 KR 20240148730
(71) Applicant: LG Innotek Co., Ltd., Seoul 07796 (KR)
(72) Inventor: KIM, Hyung, Seoul 07796 (KR); KIM, Seo Jin, Seoul 07796 (KR); YOON, Hong Ju, Seoul 07796 (KR)
(74) Representative: Plasseraud IP
(86) International application number: PCT/KR2024/016726
(87) International publication number: WO 2025/095551

(57) **Abstract**

Disclosed is a wireless charging control method of a wireless charging control apparatus for an electric vehicle being traveling, the wireless charging control method including: by a first controller, detecting entry of the electric vehicle into a first area; by the first controller, acquiring vehicle information about the electric vehicle; by the first controller, transmitting the vehicle information of the electronic vehicle to a second controller; by the first controller, controlling power feeding of a plurality of ground assemblies placed in the first area; and by the second controller, controlling power feeding of a plurality of ground assemblies placed in a second area, wherein each of the controlling of the power feeding by the first controller and the controlling of the power feeding by the second controller includes a first input voltage section, a second input voltage section, and a third input voltage section, which are performed in sequence, an input voltage increases over time in the first input voltage section, and an input voltage decreases over time in the third input voltage section, and the first input voltage section, the second input voltage section, and the third input voltage section of the second controller follow the first input voltage section, the second input voltage section, and the third input voltage section of the first controller.

## Description

### [Technical Field]

The disclosure relates to a wireless charging control apparatus for an electric vehicle and a wireless charging control method thereof.

### [Background Art]

A wireless charging system for an electric vehicle includes a ground assembly (GA) and a vehicle assembly (VA). In the case of a static wireless power transfer method, the ground assembly may be placed on a parking lot floor. In the case of a dynamic wireless power transfer method, the ground assembly may be placed on a road. The vehicle assembly is mounted to the electric vehicle.

Based on magnetic induction or magnetic resonance between a primary coil of the ground assembly and a secondary coil of the vehicle assembly, power may be wirelessly transmitted from the ground assembly to the vehicle assembly. To improve a wireless power transfer efficiency of the dynamic wireless power transfer method, there is a need to control power feeding for the plurality of ground assemblies arranged in sequence on the road.

### [Disclosure]

### [Technical Problem]

A technical aspect of the disclosure is to provide a wireless charging control apparatus for a traveling electric vehicle and a wireless charging control method thereof.

Another technical aspect of the disclosure is to provide a method of precisely controlling a wireless charging control apparatus for a traveling electric vehicle.

Still another technical aspect of the disclosure is to provide a method of improving a charging efficiency of a wireless charging control apparatus for a traveling electric vehicle.

Still another technical aspect of the disclosure is to provide a method of detecting a foreign object by a wireless charging system for an electric vehicle.

Still another technical aspect of the disclosure is to provide a wireless charging control method when a foreign object is detected by a wireless charging system for an electric vehicle.

### [Technical Solution]

According to an embodiment of the disclosure, a wireless charging control method of a wireless charging control apparatus for an electric vehicle being traveling includes: by a first controller, detecting entry of the electric vehicle into a first area; by the first controller, acquiring vehicle information about the electric vehicle; by the first controller, transmitting the vehicle information of the electronic vehicle to a second controller; by the first controller, controlling power feeding of a plurality of ground assemblies placed in the first area; and by the second controller, controlling power feeding of a plurality of ground assemblies placed in a second area, wherein each of the controlling of the power feeding by the first controller and the controlling of the power feeding by the second controller includes a first input voltage section, a second input voltage section, and a third input voltage section, which are performed in sequence, an input voltage increases over time in the first input voltage section, and an input voltage decreases over time in the third input voltage section, and the first input voltage section, the second input voltage section, and the third input voltage section of the second controller follow the first input voltage section, the second input voltage section, and the third input voltage section of the first controller.

A portion of the second input voltage section of the first controller may overlap with a portion of the first input voltage section of the second controller.

At least one among a start time of the first input voltage section of the second controller, a start time of the second input voltage section of the second controller, a maintenance period of the second input voltage section of the second controller, and a start time of the third input voltage section of the second controller may be set based on the vehicle information.

A start time of the first input voltage section of the second controller may overlap with the first input voltage section of the first controller or the second input voltage section of the first controller.

A start time of the second input voltage section of the second controller may overlap with the second input voltage section of the first controller.

A first input voltage in the second input voltage section of the first controller may be higher than a second input voltage in the first input voltage section of the second controller.

The vehicle information may include speed information about the electric vehicle.

The first area and the second area may include an overlapping area therebetween, and in the transmitting, the first controller may transmit the vehicle information of the electric vehicle to the second controller before the electric vehicle enters the overlapping area.

At least one ground assembly may be placed within the overlapping area, and the at least one ground assembly may be controlled by the first controller or the second controller.

The at least one ground assembly may be controlled by the first controller when a switch connected between the at least one ground assembly and the first and second controllers is in a first state, and the at least one ground assembly may be controlled by the second controller when the switch is in a second state.

The at least one ground assembly may be controlled by the controller having a higher voltage state between the first controller and the second controller.

The controlling the power feeding by the second controller may be triggered by the vehicle information about the electric vehicle received from the first controller.

According to an embodiment of the disclosure, a wireless charging control apparatus for an electric vehicle being traveling includes a communicator configured to acquire vehicle information from the electric vehicle then enters the plurality of ground assemblies arranged in sequence; and a controller configured to control power feeding for the plurality of ground assemblies based on the vehicle information, wherein the controller controls the power feeding for the plurality of ground assemblies to proceed with a first input voltage section, a second input voltage section, and a third input voltage section sequentially, an input voltage increases over time in the first input voltage section, and an input voltage decreases over time in the third input voltage section, and the first input voltage section, the second input voltage section, and the third input voltage section for some among the plurality of ground assemblies follow the first input voltage section, the second input voltage section, and the third input voltage section for others among the plurality of ground assemblies.

The controller may include a first controller that controls the power feeding for the ground assemblies placed in the first area among the plurality of ground assemblies, and a second controller that controls the power feeding of the ground assemblies placed in the second area among the plurality of ground assemblies, and the first input voltage section, the second input voltage section, and the third input voltage section controlled by the second controller may follow the first input voltage section, the second input voltage section, and the third input voltage section controlled by the first controller.

The control of the second controller may be triggered by the first controller.

According to another embodiment of the disclosure, a wireless charging control apparatus for an electric vehicle traveling on a travel charging road comprises a communicator configured to receive state information from at least one among a plurality of ground assemblies placed on the travel charging road, the electric vehicle, a vehicle assembly mounted to the electric vehicle, and an external management device; a controller configured to detect an emergency state based on the state information, and interrupt power feeding of at least some among the plurality of ground assemblies; and an indication unit installed along the travel charging road, and controlled by the controller to indicate the emergency state.

The wireless charging control apparatus may further include an emergency signal input unit installed along the travel charging road, and the controller may interrupt the power feeding for at least some among the plurality of ground assemblies and control the indication unit to indicate the emergency state when an emergency signal is input to the emergency signal input unit.

The indication unit and the emergency signal input unit may be mounted to a structure installed along the travel charging road.

The plurality of ground assemblies may include a first ground assembly set and a second ground assembly set placed on the travel charging road in sequence along a travel direction of the electric vehicle; the indication unit may include a first indication unit for indicating an emergency state of the first ground assembly set and a second indication unit for indicating an emergency state of the second ground assembly set; and the emergency signal input unit may include a first emergency signal input unit to which an emergency signal for the first ground assembly set is input, and a second emergency signal input unit to which an emergency signal for the second ground assembly set is input.

The indication unit and the emergency signal input unit may be arranged in a separation zone to overlap between the first and second ground assembly sets in a direction perpendicular to the travel direction.

The first indication unit may include a first start indicating lamp placed at a start point of the first ground assembly set and a first termination indicating lamp placed at a termination point of the first ground assembly set, and the second indication unit may include a second start indicating lamp placed at a start point of the second ground assembly set and a second termination indicating lamp placed at a termination point of the second ground assembly set.

Both the first start indicating lamp and the first termination indicating lamp are turned on when the first ground assembly set is in the emergency state, and both the second start indicating lamp and the second termination indicating lamp are turned on when the second ground assembly set is in the emergency state.

The second emergency signal input unit may be placed between the first termination indicating lamp and the second start indicating lamp.

The emergency state may include at least one among a breakdown of at least some among the plurality of ground assemblies, the presence of a foreign object, a bad road condition, occurrence of an accident and fire.

The communicator may transmit the emergency state to the electric vehicle or the vehicle assembly mounted to the electric vehicle.

The emergency state may include a first emergency state in which the power feeding is interrupted for a first period of time, and a second emergency state in which the power feeding is interrupted for a second period of time longer than the first period of time, and the controller may detect the first emergency state or the second emergency state based on the state information and control the period of time for which the indication unit indicates the emergency state based on the detection results.

The emergency state may include a first emergency state in which the power feeding is interrupted for a first section, and a second emergency state in which the power feeding is interrupted for a second section longer than the first section, and the controller may detect the first emergency state or the second emergency state based on the state information and control the section in which the indication unit indicates the emergency state based on the detection results.

According to another embodiment of the disclosure, a wireless charging control method of a wireless charging system for an electric vehicle includes: by the wireless charging control apparatus, receiving state information from a charging assembly including a ground assembly and a vehicle assembly; by the wireless charging control apparatus, detecting an abnormal state of the ground assembly based on the state information; and by the wireless charging control apparatus, changing power output from the ground assembly when the abnormal state of the ground assembly is detected, wherein the state information includes at least one of temperature acquired through the charging assembly, temperature change rate per hour, impedance, current, voltage, power, magnetic flux density, and a coupling coefficient between the ground assembly and the vehicle assembly.

The current may be the current of a coil of the ground assembly or vehicle assembly, and the voltage may be the voltage of the coil of the ground assembly or vehicle assembly.

The state information may include state information about the ground assembly before being connected to the vehicle assembly after first power is applied to the ground assembly.

The wireless charging control method may further include applying second power higher than the first power to the ground assembly when the abnormal state of the ground assembly is not detected.

The state information may further include state information of when the ground assembly supplies the second power higher than the first power to the vehicle assembly.

The detecting the abnormal state of the ground assembly may include detecting the abnormal state of the ground assembly when the temperature is out of a predetermined temperature range, when the temperature change rate is out of a predetermined temperature change rate range, when the impedance is out of a predetermined impedance range, when at least one among the current, the voltage and the power is out of at least one of predetermined current, voltage and power ranges, or when the coupling coefficient is out of a predetermined coupling coefficient range.

The wireless charging control method may further include, by the wireless charging control apparatus, receiving vehicle information from the vehicle assembly, and the detecting the abnormal state of the ground assembly may further use the vehicle information, and the vehicle information may include at least one among identification information about the vehicle assembly, and the current, voltage and power of the vehicle assembly.

According to still another embodiment of the disclosure, a wireless charging control method of a wireless charging system for an electric vehicle includes: by the wireless charging control apparatus, receiving state information from each of a plurality of ground assemblies; by the wireless charging control apparatus, detecting an abnormal state of each ground assembly based on each piece of the state information, and by the wireless charging control apparatus, changing power output from the ground assembly from which the abnormal state is detected among the plurality of ground assemblies, wherein the state information includes at least one among the temperature, temperature change rate, impedance, current, voltage, power, and coupling coefficient of each ground assembly.

The wireless charging control method may further include, by the wireless charging control apparatus, identifying that the ground assembly, of which a pattern of transmitting the state information is different from those of other ground assemblies, among the plurality of ground assemblies is in the abnormal state.

The receiving the state information may include receiving state information from a first ground assembly that is charging a first vehicle assembly, and receiving state information from the first ground assembly that is charging a second vehicle assembly following the first vehicle assembly, and the detecting the abnormal state may further include changing power output from the second ground assembly on the route to be passed by the second vehicle assembly when the abnormal state of the first ground assembly is not detected in connection with the first vehicle assembly but the abnormal state of the first ground assembly is detected in connection with the second vehicle assembly.

According to an embodiment of the disclosure, a wireless charging system for an electric vehicle includes a plurality of ground assemblies; and a wireless charging control apparatus, wherein the plurality of ground assemblies are arranged in sequence and set to transmit their own state information to the wireless charging control apparatus, the wireless charging control apparatus detects an abnormal state of each ground assembly based on each state information and is configured to change power output from the ground assembly, from which the abnormal state is detected, among the plurality of ground assemblies, and the state information includes at least one of the temperature, temperature change rate, impedance, current, voltage, power and coupling coefficient of each ground assembly.

The wireless charging control apparatus may be configured to identify that the ground assembly, of which a pattern of transmitting the state information is different from those of other ground assemblies, among the plurality of ground assemblies is in the abnormal state.

The wireless charging control apparatus may receive state information from a first ground assembly that is charging a first vehicle assembly, receive state information from the first ground assembly that is charging a second vehicle assembly following the first vehicle assembly, and be configured to change power output from the second ground assembly on a route to be passed by the second vehicle assembly when the abnormal state of the first ground assembly is not detected in connection with the first vehicle assembly but the abnormal state of the first ground assembly is detected in connection with the second vehicle assembly.

The wireless charging control apparatus may receive state information from a first ground assembly that is charging a first vehicle assembly, receive state information from the first ground assembly that is charging a second vehicle assembly following the first vehicle assembly, and identify that the first vehicle assembly is in the abnormal state when the abnormal state of the first ground assembly is detected in connection with the first vehicle assembly but the abnormal state of the first ground assembly is not detected in connection with the second vehicle assembly.

### [Advantageous Effects]

According to an embodiment of the disclosure, the wireless charging control apparatus for the electric vehicle being traveling is precisely controlled. According to an embodiment of the disclosure, the wireless charging efficiency of the wireless charging control apparatus for the electric vehicle being traveling is improved. According to an embodiment of the disclosure, when a foreign object is present between the ground assembly and the vehicle assembly, the foreign object is quickly and accurately detected.

### [Description of Drawings]

FIG. 1 is a block diagram of an electric vehicle and a wireless charging system according to an embodiment of the disclosure.
FIG. 2 is a block diagram of a wireless charging system according to an embodiment of the disclosure.
FIG. 3 is a block diagram of a wireless charging apparatus included in a wireless charging system according to an embodiment of the disclosure.
FIG. 4 is a block diagram of a ground assembly included in a wireless charging system according to an embodiment of the disclosure.
FIG. 5 is a block diagram of a vehicle assembly included in a wireless charging system according to an embodiment of the disclosure.
FIG. 6 is a conceptual diagram of a wireless charging system according to an embodiment of the disclosure.
FIG. 7 is a flowchart of a wireless charging control method of a wireless charging system according to an embodiment of the disclosure.
FIG. 8 is a flowchart of a power feeding control method of a wireless charging control apparatus according to an embodiment of the disclosure.
FIG. 9 is a timing diagram of input voltages controlled by a first controller and a second controller of FIG. 8.
FIGS. 10 and 11 show examples of input voltage states controlled by the first controller and the second controller of FIG. 8.
FIG. 12 illustrates a switch between a ground assembly placed in an overlapping area and first and second controllers according to an embodiment of the disclosure.
FIG. 13 is a timing diagram of an input voltage controlled by a first controller according to an embodiment of the disclosure.
FIG. 14 is a block diagram of a wireless charging apparatus according to another embodiment of the disclosure.
FIG. 15 is a conceptual diagram of a wireless charging system according to another embodiment of the disclosure.
FIGS. 16 and 17 are flowcharts of a wireless charging control method of a wireless charging system according to another embodiment of the disclosure.
FIG. 18 is a flowchart of a wireless charging control method of a wireless charging system according to still another embodiment of the disclosure.
FIG. 19 is a flowchart of a wireless charging control method of a wireless charging system according to still another embodiment of the disclosure.
FIG. 20 is a flowchart of a wireless charging control method of a wireless charging system according to still another embodiment of the disclosure.
FIG. 21 is a diagram showing a condition that a plurality of ground assemblies are arranged in sequence on a travel route of an electric vehicle.
FIG. 22 is a flowchart of a wireless charging control method of a wireless charging system according to an embodiment of the disclosure under the condition of FIG. 21.
FIG. 23a shows an example that no abnormal states are detected from any ground assembly when state information is received from a plurality of ground assemblies arranged in sequence, and FIGS. 23b to 23e show examples that an abnormal state is detected from a ground assembly 100-5.
FIG. 24a and 24b show examples that a wireless charging control apparatus receives temperature information from first to fourth ground assemblies GA1, GA2, GA3 and GA4 in a state that the first to fourth ground assemblies GA1, GA2, GA3 and GA4 are arranged.
FIG. 25 shows an example where a wireless charging control method according to an embodiment of the disclosure is applied.
FIG. 26 shows an example where a wireless charging control method according to another embodiment of the disclosure is applied.
FIG. 27 shows an example where a wireless charging control method according to still another embodiment of the disclosure is applied.
FIG. 28 shows an example where a wireless charging control method according to still another embodiment of the disclosure is applied.
FIG. 29 shows an example where a wireless charging control method according to still another embodiment of the disclosure is applied.

### [Modes of the Invention]

Below, exemplary embodiments of the disclosure will be described in detail with reference to the accompanying drawings.

However, the spirit and scope of the disclosure is not limited to a part of the embodiments described, and may be implemented in various other forms, and within the spirit and scope of the disclosure, one or more of the elements of the embodiments may be selectively combined and replaced.

In addition, unless expressly otherwise defined and described, the terms used in the embodiments of the disclosure (including technical and scientific terms may be construed the same meaning as commonly understood by one of ordinary skill in the art to which this invention belongs, and the terms such as those defined in commonly used dictionaries may be interpreted as having a meaning that is consistent with their meaning in the context of the relevant art.

Further, the terms used in the embodiments of the disclosure are for describing the embodiments and are not intended to limit the disclosure

In this specification, the singular forms may also include the plural forms unless specifically stated in the phrase, and may include at least one of all combinations that may be combined in A, B, and C when described in "at least one (or more) of A (and), B, and C".

Further, in describing the elements of the embodiments of the disclosure, the terms such as first, second, A, B, (a), and (b) may be used.

These terms are only used to distinguish the elements from other elements, and the terms are not limited to the essence, order, or order of the elements.

In addition, when an element is described as being "connected", "coupled", or "joined" to another element, it may include not only when the element is directly "connected" to, "coupled" to, or "connected" to other elements, but also when the element is "connected", "coupled", or "joined" by another element between the element and other elements.

In addition, when described as being formed or disposed "on (over)" or "under (below)" of each element, the "on (over)" or "under (below)" may include not only when two elements are directly connected to each other, but also when one or more other elements are formed or disposed between two elements. Further, when expressed as "on (over)" or "under (below)", it may include not only the upper direction but also the lower direction based on one element.

Below, the embodiments will be described in detail with reference to the accompanying drawings, in which like numerals refer to like elements throughout and repetitive descriptions thereof will be avoided.

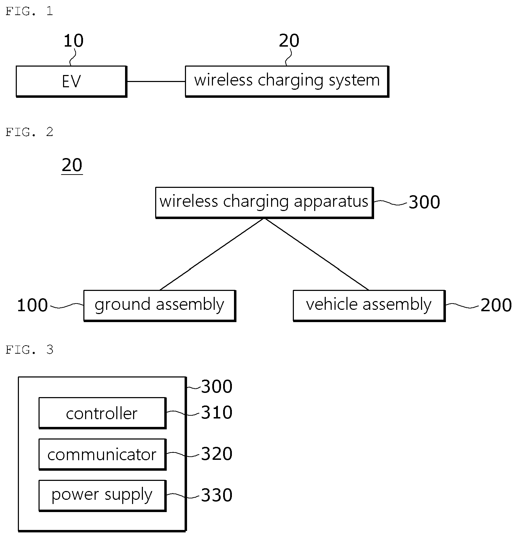

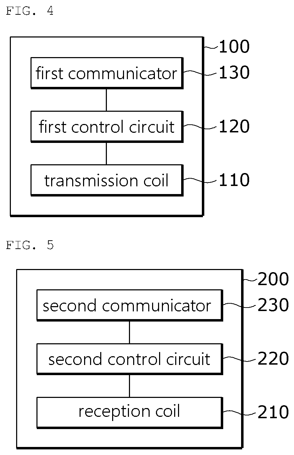

FIG. 1 is a block diagram of an electric vehicle and a wireless charging system according to an embodiment of the disclosure, FIG. 2 is a block diagram of a wireless charging system according to an embodiment of the disclosure, FIG. 3 is a block diagram of a wireless charging apparatus included in a wireless charging system according to an embodiment of the disclosure, FIG. 4 is a block diagram of a ground assembly included in a wireless charging system according to an embodiment of the disclosure, and FIG. 5 is a block diagram of a vehicle assembly included in a wireless charging system according to an embodiment of the disclosure.

Referring to FIG. 1, an electric vehicle (EV) 10 may be charged by the wireless charging system 20. In this specification, the electric vehicle 10 refers to a vehicle driven by an electric motor that draws current from a rechargeable storage battery or other portable energy storage devices.

According to an embodiment of the disclosure, the electric vehicle 10 may refer to a vehicle that is rechargeable by a wireless charging method without using a physical plug and socket.

Referring to FIGS. 2 to 5, the wireless charging system 20 includes a ground assembly (GA) 100, a vehicle assembly (VA) 200, and a wireless charging apparatus 300.

The ground assembly 100 may be placed on or at least partially buried in a parking lot floor or a road, and the vehicle assembly 200 may be mounted to the electric vehicle 10. The vehicle assembly 200 may be mounted to a lower portion of the electric vehicle 10, be arranged to face the ground assembly 100 buried in the parking lot floor or the road, and then wirelessly receive the power from the ground assembly 100.

In the case of a static wireless power transfer method, the ground assembly 100 may be placed on the parking lot floor, and a transmission coil 110 of the ground assembly 100 may be aligned with a reception coil 210 of the vehicle assembly 200 mounted to the electric vehicle 10 being parked. In the case of a dynamic wireless power transfer method, the ground assembly 100 may be placed on the road, and the transmission coil 110 of the ground assembly 100 may be aligned with the reception coil 210 of the vehicle assembly 200 mounted to the electric vehicle 10 being traveling.

The wireless charging apparatus 300 controls the ground assembly 100 and/or the vehicle assembly 200, and supplies the power to the ground assembly 100. To this end, the wireless charging apparatus 300 may communicate with the ground assembly 100 and/or the vehicle assembly 200 and transmit a control signal to each of the ground assembly 100 and the vehicle assembly 200. The wireless charging apparatus 100 may be electric vehicle supply equipment (EVSE) or may be a part of the EVSE.

The wireless charging apparatus 300 includes a controller 310, a communicator 320, and a power supply 330. The controller 310 controls the transmission coil of the ground assembly 100. The communicator 320 communicates with the electric vehicle 10 or an electric vehicle communication controller (EVCC) mounted to the electric vehicle 10, and also communicates with the ground assembly 100. The power supply 330 supplies the power to the reception coil of the vehicle assembly 200 mounted to the electric vehicle 10 through the transmission coil of the ground assembly 100. The controller 310 and the communicator 320 of the wireless charging apparatus 300 may be a supply equipment communication controller (SECC). In this specification, the controller 310 and the communicator 320 of the wireless charging apparatus 300 may also be referred to as a wireless charging control apparatus or controller.

Meanwhile, the ground assembly 100 may include the transmission coil 110, a first control circuit 120, and a first communicator 130, and the vehicle assembly 200 may include the reception coil 210, a second control circuit 220, and a second communicator 230.

When the vehicle assembly 200 is aligned with the ground assembly 100, signal exchange may occur to establish connection between the first communicator 130 of the ground assembly 100 and the second communicator 230 of the vehicle assembly 200. For example, the first communicator 130 of the ground assembly 100 periodically transmits a ping signal, and the second communicator 230 of the vehicle assembly 200 receives the ping signal and establish the connection based on the signal exchange with the first communicator 130 of the ground assembly 100.

The first communicator 130 of the ground assembly 100 and the second communicator 230 of the vehicle assembly 200 may communicate with the wireless charging apparatus 300. For example, the first communicator 130 of the ground assembly 100 may transmit state information to the wireless charging apparatus 300, and the wireless charging apparatus 300 may transmit a control signal for wireless power transfer to the first communicator 130 of the ground assembly 100. The first communicator 130 of the ground assembly 100 operates the first control circuit 120 based on the control signal received from the wireless charging apparatus 300, and the transmission coil 110 may be controlled based on the operation of the first control circuit 120. Further, the second communicator 230 of the vehicle assembly 200 may transmit vehicle information to the wireless charging apparatus 300, and the wireless charging apparatus 300 may transmit a control signal for wireless power reception to the second communicator 230 of the vehicle assembly 200. The second communicator 230 of the vehicle assembly 200 operates the second control circuit 220 based on the control signal received from the wireless charging apparatus 300, and the reception coil 210 may be controlled based on the operation of the second control circuit 220. However, an embodiment of the disclosure is not limited to these examples, Alternatively, some components of the first control circuit 120 and the first communicator 130 of the ground assembly 100 may be included in the wireless charging apparatus 300, and some components of the second control circuit 220 and the second communicator 230 of the vehicle assembly 200 may be included in the EVCC mounted to the electric vehicle 10.

An embodiment of the disclosure relates to dynamic wireless power transfer for charging the electric vehicle 10 being traveling.

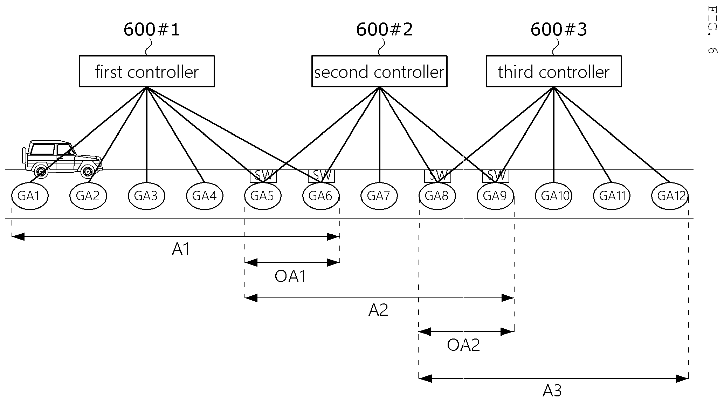

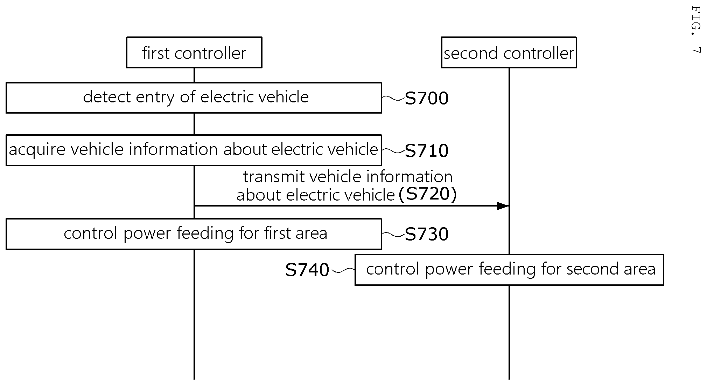

FIG. 6 is a conceptual diagram of a wireless charging system according to an embodiment of the disclosure, and FIG. 7 is a flowchart of a wireless charging control method of a wireless charging system according to an embodiment of the disclosure.

Referring to FIG. 6, the plurality of ground assemblies are arranged in sequence on a travel charging road. Here, the travel charging road refers to a road that enables wireless charging for the traveling electric vehicle 10. Here, the transmission coil of the ground assembly may also be referred to as a segment.

When the electric vehicle 10 travels on the travel charging road, the reception coil of the vehicle assembly 300 mounted to the lower portion of the electric vehicle 10 is aligned with the transmission coil arranged on the travel charging road and receives the power wirelessly from the transmission coil.

According to an embodiment of the disclosure, the wireless charging control apparatus acquires the vehicle information from the electric vehicle 10 entering the travel charging road, and controls the power feeding of the plurality of ground assemblies arranged in sequence on the travel charging road based on the acquired vehicle information. Accordingly, a wireless charging efficiency is improved.

In the dynamic wireless power transfer, vehicle detection is very important to transmit the power safely and efficiently. The power transfer may start when the electric vehicle 10 enters the travel charging road and is placed on one of the ground assemblies. The power transfer needs to be stopped immediately when the electric vehicle 10 exits the ground assembly. This procedure is based on the vehicle detection.

The vehicle detection is based on point to point signaling (P2PS) using a radio frequency (RF). The wireless charging control apparatus uses the RF to detect the location of the electric vehicle 10 traveling on the travel charging road, and identifies which ground assembly is used to start transmitting the power.

The wireless charging control apparatus controls the plurality of ground assemblies arranged on the travel charging road. Here, the wireless charging control apparatus is connected to each of the ground assemblies through P2PS communication lines, and detects the electric vehicle 10 traveling on that ground assembly.

For example, the vehicle detection may be based on bidirectional wireless P2PS. In the bidirectional wireless P2PS, the wireless charging control apparatus and the electric vehicle 10 detect information. The bidirectional wireless P2PS may be used not only to exchange information the wireless charging control apparatus and the electric vehicle 10 but also to detect the location of the electric vehicle 10 traveling on the ground assembly.

The vehicle detection may be triggered by information about an infrastructure signal broadcasted by the ground assembly, the broadcasting signal of the ground assembly may reach the EVCC mounted to the electric vehicle 10 traveling on the ground assembly, and the EVCC mounted to the electric vehicle 10 may transmit a response signal containing information about whether or not the electric vehicle 10 requires charging. The wireless charging control apparatus identifies whether or not to make that ground assembly perform charging based on the response signal of the electric vehicle 10.

Meanwhile, supplying or interrupting the power to the ground assembly based on the location of the electric vehicle 10 is very important in terms of safety and efficiency. Ground assembly switching means that, when the electric vehicle 10 moves to the next ground assembly, the power is supplied to the next ground assembly and the power to the current ground assembly is interrupted, and may also be referred to as segment switching, transmission coil switching, handover, etc.

According to an embodiment of the disclosure, a first controller 600#1 controls power feeding to ground assemblies GA1 to GA6 placed in a first area A1 among the plurality of ground assemblies, a second controller 600#2 controls power feeding to ground assemblies GA5 to GA9 placed in a second area A2 among the plurality of ground assemblies, and a third controller 600#3 controls power feeding to ground assemblies GA8 to GA12 placed in a third area A3 among the plurality of ground assemblies. There may be a first overlapping area OA1 where the first area A1 and the second area A2 overlap each other, and a second overlapping area OA2 where the second area A2 and the third area A3 overlap each other. According to an embodiment of the disclosure, each of the first controller 600#1, the second controller 600#2, and the third controller 600#3 may be the foregoing wireless charging control apparatus. In other words, each of the first controller 600#1, the second controller 600#2, and the third controller 600#3 may include the controller 310 and the communicator 320 described with reference to FIG. 3. According to an alternative embodiment of the disclosure, the wireless charging control apparatus may include the controller 310 and the communicator 320 as described with reference to FIG. 3, and the controller 310 may include the first controller 600#1, the second controller 600#2, and the third controller 600#3.

Below, the wireless charging control method of the wireless charging control apparatus will be described in a case where the electric vehicle 10 travels in a direction from the ground assembly GA1 to the ground assembly GA12.

Referring to FIG. 7, the first controller 600#1 detects that the electric vehicle 10 enters the first area A1 (S700). As described above, step S700 is triggered by information about the infrastructure signal broadcasted by the ground assembly GA1 placed in the first area A1, and the entry of the electric vehicle 10 may be detected when the EVCC mounted to the electric vehicle 10 or a MCU of the electric vehicle 10 transmits a response signal to the broadcasting signal of the ground assembly GA1.

Next, the first controller 600#1 acquires vehicle information about the electric vehicle 10 (S710). Here, the vehicle information may include charging information about the electric vehicle 10. The charging information about the electric vehicle 10 may include information about whether or not the electric vehicle 10 requires charging. As described above, the charging information about the electric vehicle 10 may be involved in the response signal of step S700. The charging information about the electric vehicle 10 from the EVCC mounted to the electric vehicle 10 or the MCU of the electric vehicle 10 in response to the broadcasting signal of the ground assembly GA1 may further include information about whether the electric vehicle 10 is chargeable, information about battery specifications of the electric vehicle 10, information about remaining battery capacity of the electric vehicle 10, etc. The vehicle information may further include speed information about the electric vehicle 10. The speed information about the electric vehicle 10 may include current speed information and acceleration information about the electric vehicle 10. Besides, the vehicle information further includes specification information about the electric vehicle 10, specification information about the EVCC mounted to the electric vehicle 10, and specification information about the vehicle assembly mounted to the electric vehicle 10.

Next, the first controller 600#1 transmits the vehicle information about the electric vehicle 10 acquired in step S710 to the second controller 600#2 (S720). In this case, the first controller 600#1 and the second controller 600#2 may communicate with each other directly. Alternatively, the first controller 600#1 and the second controller 600#2 may communicate with each other through an upper management server (not shown). The power feeding control of the second controller 600#2 may be triggered by the vehicle information transmitted from the first controller 600#1. Accordingly, the second controller 600#2 may operate in a sleep mode until triggered by the first controller 600#1, thereby reducing the power consumption of the second controller 600#2.

Meanwhile, the first controller 600#1 controls the power feeding of the plurality of ground assemblies GA1 to GA6 arranged in the first area A1 (S730). To this end, each of the plurality of ground assemblies GA1 to GA6 may be connected to the first controller 600#1 through communication lines. For example, each of the plurality of ground assemblies GA1 to GA6 may perform the P2P signaling with the first controller 600#1.

In addition, the second controller 600#2 controls the power feeding of the plurality of ground assemblies GA5 to GA9 placed in the second area A2 based on the vehicle information of the electric vehicle 10 received from the first controller 600#1 (S740). Each of the plurality of ground assemblies GA5 to GA9 placed in the second area A2 may be connected to the second controller 600#2 through communication lines. For example, each of the plurality of ground assemblies GA5 to GA9 may perform the P2P signaling with the second controller 600#2.

According to an embodiment of the disclosure, when the plurality of ground assemblies GA1 to GA9 are arranged in sequence along the travel direction of the electric vehicle 10, the first controller 600#1 and the second controller 600#2 may sequentially control the power feeding of the plurality of ground assemblies GA1 to GA9. According to an embodiment of the disclosure, the first controller 600#1 controls a first input voltage section, a second input voltage section and a third input voltage section to proceed sequentially with respect to the first area A1, and the second controller 600#2 controls the first input voltage section, the second input voltage section, and the third input voltage section to proceed sequentially with respect to the second area A2. The first input voltage section may be referred to as a pre-power state, and may mean a state before the power for the wireless charging is transmitted to the vehicle assembly, as a section in which the input voltage to the ground assembly increases over time. The second input voltage section may mean a state in which the power for the wireless charging is being applied, and may include a power transfer state. The voltage input to the ground assembly in the second input voltage section may be higher than the voltage input to the ground assembly in the first input voltage section. The voltage input to the ground assembly during the second input voltage section may be maintained at the highest voltage. Alternatively, although not shown, the second input voltage section may include a section where the voltage temporarily drops from the highest voltage and then rises again to the highest voltage. The third input voltage section may be referred to as a post-power state, and may mean a section in which the input voltage to the ground assembly is lowered over time. After the third input voltage section, the input voltage to the ground assembly may become zero. Alternatively, an inverter rise state may further proceed before the first input voltage section, i.e., before the pre-power state, and an inverter fall state may further proceed after the third input voltage section, i.e., the post-power state.

According to an embodiment of the disclosure, the first input voltage section, the second input voltage section, and the third input voltage section controlled by the second controller 600#2 follow the first input voltage section, the second input voltage section, and the third input voltage section controlled by the first controller 600#1. As described above, the first area A1 controlled by the first controller 600#1 and the second area A2 controlled by the second controller 600#2 are arranged in sequence along the travel direction of the electric vehicle 10, and thus the electric vehicle 10 first travels in the first area A1 and then travels in the second area A2. Accordingly, the ground assembly on which the electric vehicle 10 is traveling may operate as the second input voltage section, thereby maximizing the wireless charging efficiency.

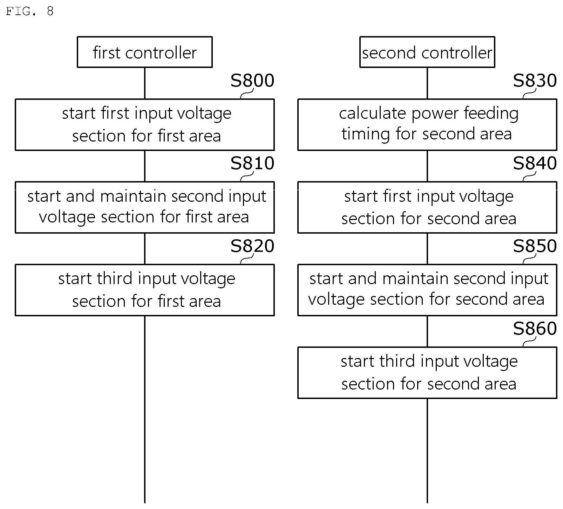

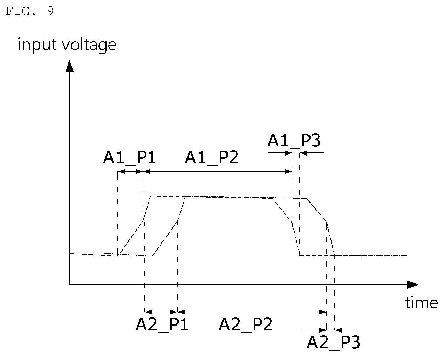

FIG. 8 is a flowchart of a power feeding control method of a wireless charging control apparatus according to an embodiment of the disclosure, FIG. 9 is a timing diagram of input voltages controlled by a first controller and a second controller of FIG. 8, and FIGS. 10 and 11 show examples of input voltage states controlled by the first controller and the second controller of FIG. 8.

Referring to FIG. 8, the first controller 600#1 starts the first input voltage section for the first area A1 (S800). In other words, the input voltage rises over time for the first area A1 before the power for the wireless charging is transferred.

Next, the first controller 600#1 starts the second input voltage section for the first area A1 and maintains the second input voltage section for a predetermined period (S810). The second input voltage section may be a power transfer section for the wireless charging. The voltage input to the first area A1 in the second input voltage section may be higher than the voltage input to the first area A1 in the first input voltage section.

Next, the first controller 600#1 starts the third input voltage section for the first area A1 (S820). In the third input voltage section, the voltage input to the first area A1 may drop over time. When the third input voltage section ends, the voltage input to the first area A1 may become 0.

With this, the second controller 600#2 calculates a power feeding timing for the second area A2 based on the vehicle information received from the first controller 600#1 (S830). Here, the power feeding timing may include a start time of the first input voltage section, a start time of the second input voltage section, a maintenance period of the second input voltage section, and a start time of the third input voltage section. The second controller 600#2 may predict a point in time when the electric vehicle 10 reaches the second area A2, a period of time for which the electric vehicle 10 travels in the second area A2, and a point in time when the electric vehicle 10 exits the second area A2, based on the location information and speed information about the electric vehicle 10, included in the vehicle information received from the first controller 600#1, thereby calculating the power feeding timing for the second area A2.

In addition, the second controller 600#2 starts the first input voltage section for the second area A2 (S840), starts the second input voltage section for the second area A2, and maintain the second input voltage section for a predetermined period of time (S850), and start the third input voltage section for the second area A2 (S860).

In this case, as shown in FIG. 9, a portion of the second input voltage section A1_P2 of the first controller 600#1 may overlap with a portion of the first input voltage section A2_P1 of the second controller 600#2. In other words, while the wireless charging is performed for the electric vehicle 10 traveling in the first area A1, the second area A2 may prepare for the wireless charging for the electric vehicle 10. Accordingly, the ground assembly on which the electric vehicle 10 is traveling may operate as the second input voltage section, thereby maximizing the wireless charging efficiency.

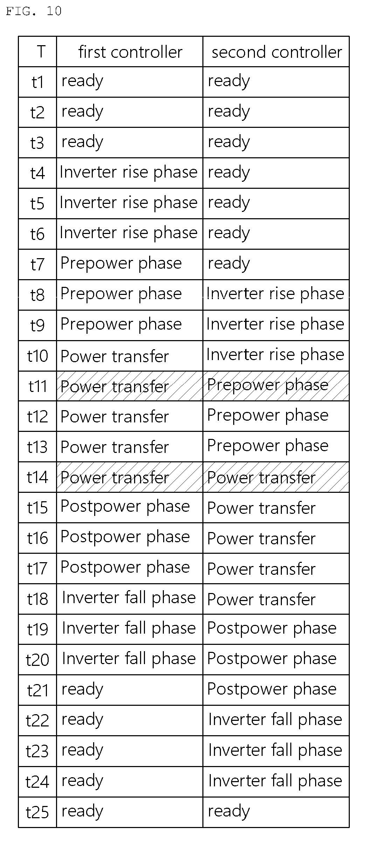

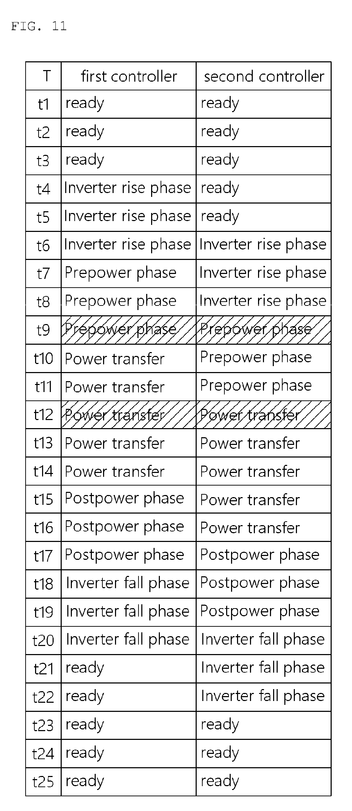

In other words, the start time of the first input voltage section A2_P1 of the second controller 600#2 may overlap with the first input voltage section A1_P1 of the first controller 600#1 or the second input voltage section A1_P2 of the first controller 600#1. For example, as shown in FIG. 10, the start time of the pre-power state of the second controller 600#2 may overlap with the power transfer state of the first controller 600#1. Alternatively, as shown in FIG. 11, the start time of the pre-power state of the second controller 600#2 may overlap with the pre-power state of the first controller 600#1. Accordingly, the second controller 600#2 reaches the power transfer state quickly or reaches the power transfer state in advance when the electric vehicle 10 approaches the second area A2, thereby improving the wireless charging efficiency.

The start time of the second input voltage section A2_P2 of the second controller 600#2 may overlap with the second input voltage section A1_P2 of the first controller 600#1. For example, as shown in FIGS. 10 and 11, the start time of the power transfer state of the second controller 600#2 may overlap with the power transfer state of the first controller 600#1. Accordingly, the second controller 600#2 reaches the power transfer state quickly or reaches the power transfer state in advance when the electric vehicle 10 approaches the second area A2, thereby improving the wireless charging efficiency.

Meanwhile, referring back to FIG. 6, the first area A1 and the second area A2 may include an overlapping area. For example, the ground assemblies GA5 and GA6 may be placed in the overlapping area OA1 of the first and second areas A1 and A2. According to an embodiment of the disclosure, the ground assemblies GA5 and GA6 placed in the overlapping area between the first area A1 controlled by the first controller 600#1 and the second area A2 controlled by the second controller 600#2 may be controlled by the first controller 600#1 or the second controller 600#2.

To this end, in step S720 of FIG. 7, the first controller 600#1 may transmit the vehicle information about the electric vehicle 10 to the second controller 600#2 before the electric vehicle 10 enters the overlapping area. Accordingly, the power feeding control of the second controller 600#2 may be triggered, and the ground assemblies GA5 and GA6 placed in the overlapping area may be controlled by the first controller 600#1 or the second controller 600#2.

According to an embodiment of the disclosure, a switch SW may be connected between each ground assembly placed in the overlapping area, the first controller 600#1, and the second controller 600#2.

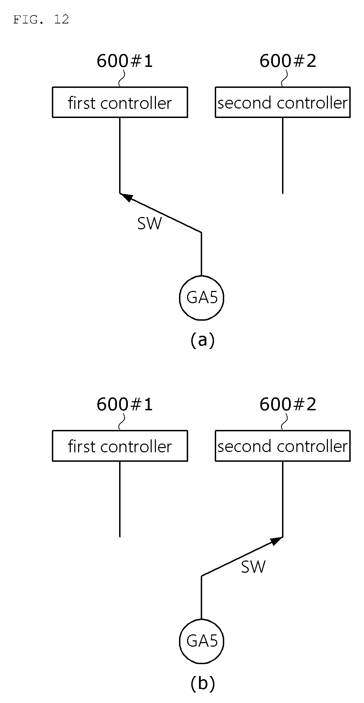

FIG. 12 illustrates a switch between a ground assembly placed in an overlapping area and first and second controllers according to an embodiment of the disclosure.

Referring to (a) in FIG. 12, when the switch SW is in a first state as connected to the first controller 600#1, the ground assembly GA5 is controlled by the first controller 600#1. Referring to (b) in FIG. 12, when the switch SW is in a second state as connected to the second controller 600#2, the ground assembly GA5 may be controlled by the second controller 600#2. For example, the switch SW may be connected to the controller with a higher input voltage state between the first controller 600#1 and the second controller 600#2. Accordingly, the ground assembly GA5 may be controlled by the controller with a higher input voltage state between the first controller 600#1 and the second controller 600#2. Here, the switch SW may be a hardware device including a DC-DC converter. The switch SW may also be a hardware device including a full bridge converter or a half bridge converter. Alternatively, the functions of the switch SW may be implemented in software.

Accordingly, the ground assembly placed in the overlapping area may be controlled by the controller with the higher input voltage state without any conflict between the first controller 600#1 and the second controller 600#2, thereby improving the wireless charging efficiency.

According to an embodiment of the disclosure, the input voltage sections may be controlled in sequence even for the plurality of ground assemblies controlled by one controller.

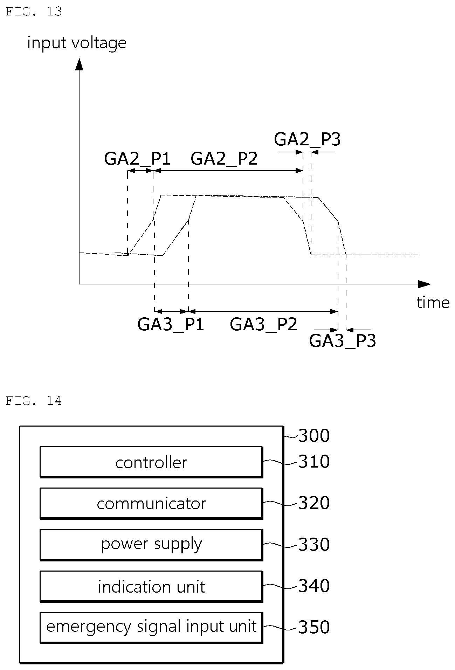

FIG. 13 is a timing diagram of an input voltage controlled by a first controller according to an embodiment of the disclosure.

FIG. 13 illustrates the timing diagram of the input voltage for two ground assemblies GA2 and GA3 among the plurality of ground assemblies GA1 to GA6 placed in the first area A1 controlled by the first controller 600#1.

Here, when the two ground assemblies GA2 and GA3 are placed in sequence along the travel direction of the electric vehicle 10, the first controller 600#1 may control the power feeding of the two ground assemblies GA2 and GA3 sequentially. According to an embodiment of the disclosure, the first controller 600#1 may control the first input voltage section, the second input voltage section, and the third input voltage section to proceed sequentially for each ground assembly. In other words, the first input voltage section, the second input voltage section, and the third input voltage section may be controlled to proceed sequentially for the ground assembly GA2, and the first input voltage section, the second input voltage section, and the third input voltage section may be controlled to proceed sequentially for the ground assembly GA3.

In this case, the first input voltage section GA3_P1, the second input voltage section GA3_P2, and the third input voltage section GA3_P3 for the ground assembly GA3 may follow the first input voltage section GA2_P1, the second input voltage section GA2_P2 and the third input voltage section GA2_P3 for the ground assembly GA2.

For example, the start time of the first input voltage section of the ground assembly GA3 may overlap with the first input voltage section or the second input voltage section of the ground assembly GA2.

Further, the start time of the second input voltage section of the ground assembly GA3 may overlap with the second input voltage section of the ground assembly GA2.

For the convenience of description, the timing diagram for only the two ground assemblies GA2 and GA3 is shown, but the input voltages for the other ground assemblies placed in the first area A1 may also be controlled in sequence according to locations on the travel charging road. In other words, the first input voltage section, the second input voltage section, and the third input voltage section for the ground assembly GA2 may follow the first input voltage section, the second input voltage section, and the third input voltage section for the ground assembly GA1, and the first input voltage section, the second input voltage section, and the third input voltage section for the ground assembly GA4 may follow the first input voltage section, the second input voltage section, and the third input voltage section for the ground assembly GA3.

Accordingly, when the electric vehicle 10 approaches each ground assembly, the power transfer state is achieved quickly or achieved in advance, thereby improving the wireless charging efficiency.

Meanwhile, another embodiment of the disclosure relates to the wireless charging control method of the wireless charging control apparatus when an emergency occurs during the dynamic wireless power transfer for charging the electric vehicle 10 being traveling. Repetitive descriptions to those described with reference to FIGS. 1 to 13 will be omitted.

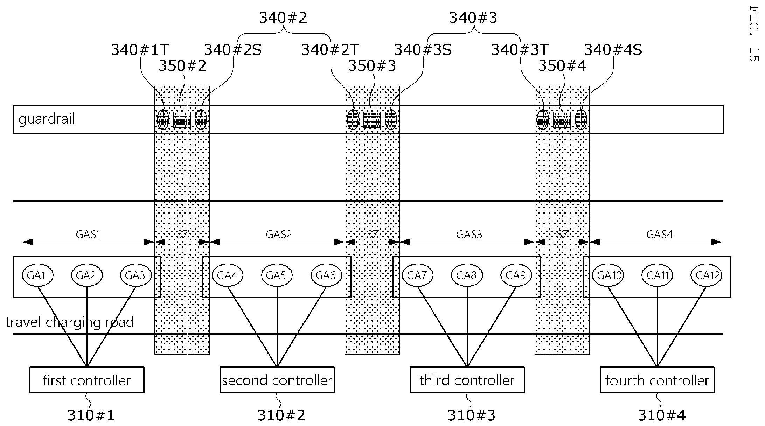

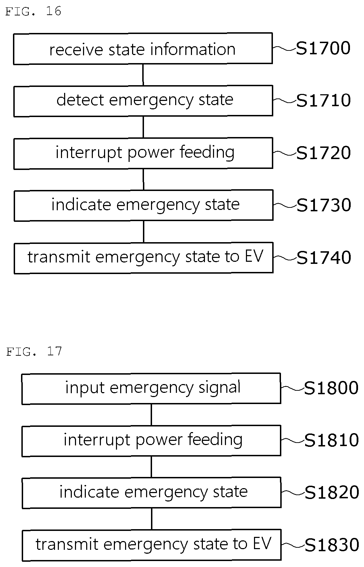

FIG. 14 is a block diagram of a wireless charging apparatus according to another embodiment of the disclosure, FIG. 15 is a conceptual diagram of a wireless charging system according to another embodiment of the disclosure, and FIGS. 16 and 17 are flowcharts of a wireless charging control method of a wireless charging system according to another embodiment of the disclosure.

Referring to FIG. 14, the wireless charging apparatus 300 may further include an indication unit 340 and an emergency signal input unit 350.

Supplying or interrupting the power to the ground assembly based on the location of the electric vehicle 10 is very important in terms of safety and efficiency.

Referring to FIGS. 15 and 16, the wireless charging control apparatus receives state information from at least one among the plurality of ground assemblies GA1, ..., GA12 arranged on the travel charging road, the electric vehicle 10, the vehicle assembly 200 mounted to the electric vehicle 10, and the external management device (not shown) (S1700). As described above, the wireless charging control apparatus may perform the P2PS to receive the state information from the plurality of ground assemblies GA1, ..., GA12. For example, the state information received from the plurality of ground assemblies GA1, ..., GA12 may include temperature information, magnetic field information, and information about current flowing in the plurality of ground assemblies GA1, ..., GA12, leakage current information around the plurality of ground assemblies GA1, ..., GA12, etc. Alternatively, the wireless charging control apparatus may receive the state information from the MCU of the electric vehicle 10, the EVCC mounted to the electric vehicle 10, the vehicle assembly 200 mounted to the electric vehicle 10 through the wireless communication. Here, the vehicle assembly 200 mounted to the electric vehicle 10 may communicate with the wireless charging control apparatus directly or via the MCU of the electric vehicle 10. For example, the state information received from the MCU of the electric vehicle 10 may include front view information about the electric vehicle 10, weather information around the electric vehicle 10, speed information about the electric vehicle 10, acceleration information about the electric vehicle 10, other emergency information, etc. The state information received from the EVCC mounted to the electric vehicle 10 may include battery information, charging state information, etc. of the electric vehicle 10. The state information received from the vehicle assembly 200 mounted to the electric vehicle 10 may include temperature information about the vehicle assembly 200, magnetic field information about the vehicle assembly 200, information about current flowing in the vehicle assembly 200, leakage current information around the vehicle assembly 200, etc. Alternatively, the wireless charging control apparatus may receive the state information from the external management device (not shown) through the wireless communication. For example, the state information received from the external management device (not shown) may include road condition information, traffic information, other emergency information, etc.

Next, the wireless charging control apparatus detects an emergency state based on the state information received in step S1700 (S1710). According to an embodiment of the disclosure, the emergency state may refer to a state that there is a need to interrupt the power feeding to the ground assembly. For example, the emergency state may refer to a state that the continuing power feeding to the ground assembly causes a breakdown or electric shock to the traveling electric vehicle and poses a threat to the safety of a driver. For example, when a breakdown occurs in at least some of the plurality of ground assemblies GA1, ..., GA12, temperature around the ground assemblies GA1, ..., GA12 may be higher than a normal temperature, a high magnetic field may be detected around the ground assemblies GA1, ..., GA12, current flowing in the plurality of ground assemblies GA1, ..., GA12 may be significantly increased, the current flowing in the plurality of ground assemblies GA1, ..., GA12 may be significantly decreased, or leakage current may be detected around the plurality of ground assemblies GA1, ..., GA12, thereby allowing the wireless charging control apparatus to detect the emergency state based on such state information. As another example, when a foreign object is present in at least some of the plurality of ground assemblies GA1, ..., GA12, the temperature around the ground assemblies GA1, ..., GA12 may be higher than the normal temperature, a high magnetic field may be detected around the ground assemblies GA1, ..., GA12, or the foreign object may be detected by the camera of the electric vehicle 10, thereby allowing the wireless charging control apparatus to detect the emergency state based on such state information. As still another example, when the road condition of the travel charging road is bad or an accident or fire occurs, the road condition, the speed of the electric vehicle 10, traffic, etc. may be detected by the electric vehicle 10 or the external management device (not shown), thereby allowing the wireless charging control apparatus to detect the emergency state based on such state information. As still another example, when it is dangerous to perform the wireless charging due to heavy rain, heavy snow, wind, etc., the wireless charging control apparatus may receive such state information from the electric vehicle 10 or the external management device, thereby detecting the emergency state based on the received state information.

Referring to FIG. 17, the wireless charging control apparatus may receive an emergency signal instead of detecting the emergency state in step S1710, based on the state information received in step S1700 (S1800). To this end, the wireless charging control apparatus may further include the emergency signal input unit 350 installed along the travel charging road. The emergency signal input unit 350 may be operated by a driver of the electric vehicle 10 or a manager of the travel charging road. When the emergency signal is input through the emergency signal input unit 350, the wireless charging control apparatus may detect the emergency state. For example, when the occurrence of an accident or fire, the presence of a foreign object, a bad road condition, the exposure of the ground assembly, or the like emergency state on the travel charging road is recognized by a driver or manager with his/her naked eyes, the emergency signal may be input to the emergency signal input unit 350. Accordingly, even though communication between at least some of the wireless charging control apparatus, the ground assembly 100, the electric vehicle 10, the vehicle assembly 200 and the external management device is not smooth, the power feeding control of the emergency state is possible.

Referring back to FIGS. 15 to 17, the wireless charging control apparatus interrupts the power feeding to at least some of the plurality of ground assemblies when detecting the emergency state (S1720 and S1810). According to an embodiment of the disclosure, the plurality of ground assemblies GA1, ..., GA12 may include a first ground assembly set GAS1, a second ground assembly set GAS2, a third ground assembly set GAS3, and a fourth ground assembly set GAS4 arranged in sequence along the travel direction of the electric vehicle 10 on the travel charging road. Each ground assembly set may include a plurality of ground assemblies arranged in sequence along the travel direction of the electric vehicle 10. The first ground assembly set GAS1, the second ground assembly set GAS2, the third ground assembly set GAS3, and the fourth ground assembly set GAS4 may be arranged being spaced apart from each other. In this case, the wireless charging control apparatus may control at least one of a power feeding interruption period, a power feeding interruption zone and a power feeding interruption speed according to the emergency states. For example, when the emergency state detected in step S1710 is identified as a temporarily emergency state, the wireless charging control apparatus may interrupt the power feeding during a first period. When the emergency state detected in step S1710 is identified as not the temporarily emergency state, the wireless charging control apparatus may interrupt the power feeding during a second period longer than the first period. As another example, when the emergency state detected in step S1710 is identified as the emergency state for the first ground assembly set GAS1, the wireless charging control apparatus may interrupt the power feeding to the first ground assembly set GAS1. When the emergency state detected in step S710 is identified as the emergency state for the first ground assembly set GAS1 and the second ground assembly set GAS2, the wireless charging control apparatus may interrupt the power feeding to the first ground assembly set GAS1 and the second ground assembly set GAS2. As still another example, when the emergency state detected in step S1710 is identified to be at a very dangerous level where the power feeding may no longer be maintained, the wireless charging control apparatus may immediately interrupt the power feeding. When the emergency state detected in step S1710 is identified to be not at the very dangerous level, the wireless charging control apparatus may gradually interrupt the power feeding.

Next, the wireless charging control apparatus indicates the emergency state (S1730, S1820). To this end, the wireless charging control apparatus according to an embodiment of the disclosure further includes the indication units 340 installed along the travel charging road and displaying the emergency state. Accordingly, a driver of the electric vehicle 10 may recognize the emergency state on the travel charging road and take a detour. Further, a manager of the travel charging road may recognize and manage the emergency state on the travel charging road.

According to an embodiment of the disclosure, the indication unit 340 and the emergency signal input unit 350 of the wireless charging control apparatus may be mounted to a structure installed along the travel charging road. For example, the structure installed along the travel charging road may include a guardrail. When the indication unit 340 and the emergency signal input unit 350 are mounted to the guardrail, the emergency state may be detected and displayed without interfering with the travel of the electric vehicle 10.

As described above, the plurality of ground assemblies GA1, ..., GA12 may include the first ground assembly set GAS1, the second ground assembly set GAS2, the third ground assembly set GAS3, and the fourth ground assembly set GAS4, which are arranged being spaced apart from each other.

In this case, the first ground assembly set GAS1, the second ground assembly set GAS2, the third ground assembly set GAS3, and the fourth ground assembly set GAS4 may be controlled independently of each other. To this end, the controller 310 may control each of the first ground assembly set GAS1, the second ground assembly set GAS2, the third ground assembly set GAS3 and the fourth ground assembly set GAS4. Alternatively, as shown, the controller 310 may include a first controller 310#1 for controlling the first ground assembly set GAS1, a second controller 310#2 for controlling the second ground assembly set GAS2, a third controller 310#3 for controlling the third ground assembly set GAS3, and a fourth controller 310#4 for controlling the fourth ground assembly set GAS4.

Likewise, the indication unit 340 may include a first indication unit 340#1 for displaying the emergency state of the first ground assembly set GAS1, a second indication unit 340#2 for displaying the emergency state of the second ground assembly set GAS2, a third indication unit 340#3 for displaying the emergency state of the third ground assembly set GAS3, and a fourth indication unit 340#4 for displaying the emergency state of the fourth ground assembly set GAS4, and the emergency signal input unit 350 may include a first emergency signal input unit 350#1 for inputting an emergency signal for the first ground assembly set GAS1, a second emergency signal input unit 350#2 for inputting an emergency signal for the second ground assembly set GAS2, a third emergency signal input unit 350#3 for inputting an emergency signal for the third ground assembly set GAS3, and a fourth emergency signal input unit 350#4 for inputting an emergency signal for the fourth ground assembly set GAS4. In this case, the first indication unit 340#1, the second indication unit 340#2, the third indication unit 340#3, and the fourth indication unit 340#4 may be controlled independently of each other. To this end, the controller 310 may control each of the first indication unit 340#1, the second indication unit 340#2, the third indication unit 340#3 and the fourth indication unit 340#4. Alternatively, the first controller 310#1 may control the first indication unit 340#1, the second controller 320#2 may control the second indication unit 340#2, the third controller 310#3 may control the third indication unit 340#3, and the fourth controller 320#4 may control the fourth indication unit 340#4. With this, the first emergency signal input unit 350#1, the second emergency signal input unit 350#2, the third emergency signal input unit 350#3, and the fourth emergency signal input unit 350#4 may be controlled independently of each other. To this end, the controller 310 may control each of the first emergency signal input unit 350#1, the second emergency signal input unit 350#2, the third emergency signal input unit 350#3, and the fourth emergency signal input unit 350#4. Alternatively, the first controller 310#1 may control the first emergency signal input unit 350#1, the second controller 320#2 may control the second emergency signal input unit 350#2, the third controller 320#3 may control the third emergency signal input unit 350#3, and the fourth controller 320#4 may control the fourth emergency signal input unit 350#4.

According to an embodiment of the disclosure, the indication unit 340 and the emergency signal input unit 350 may be arranged in a separation zone SZ to overlap between the ground assembly sets in a direction perpendicular to the travel direction of the electric vehicle 10. For example, the separation zone SZ between the ground assembly set refers to a zone that is relatively safe from magnetic fields compared to an area where the ground assembly set is placed. Accordingly, the safety of a driver or manager who operates the emergency signal input unit 350 may be guaranteed.

According to an embodiment of the disclosure, the first indication unit 340#1 may include a first start indicating lamp (not shown) placed at a start point of the first ground assembly set GAS1 and a first termination indicating lamp 340#1T placed at a termination point of the first ground assembly set GAS1, the second indication unit 340#2 may include a second start indicating lamp 340#2S placed at a start point of the second ground assembly set GAS2 and a second termination indicating lamp 340#2T placed at a termination point of the second ground assembly set GAS2, the third indication unit 340#3 may include a third start indicating lamp 340#3S placed at a start point of the third ground assembly set GAS3 and a second termination indicating lamp 340#3T placed at a termination point of the third ground assembly set GAS3, and the fourth indication unit 340#4 may include a fourth start indicating lamp 340#4S placed at a start point of the fourth ground assembly set GAS4 and a fourth termination indicating lamp (not shown) placed at a termination point of the fourth ground assembly set GAS4. For example, both the first start indicating lamp (not shown) and the first termination indicating lamp 340#1T may be set to be turn on when the first ground assembly set GAS1 is in the emergency state, and both the second start indicating lamp 340#2S and the second termination indicating lamp 340#2T may be set to be turn on when the second ground assembly set GAS2 is in the emergency state. Accordingly, a driver of the electric vehicle 10 can easily recognize the start point and termination point of the emergency state and efficiently make a detour around the area where the emergency occurs.

According to an embodiment of the disclosure, the emergency signal input unit 350 may be placed between the indication units 340. For example, the second emergency signal input unit 350#2 may be placed between the first termination indicating lamp 340#1T and the second start indicating lamp 340#2S. For example, the first termination indicating lamp 340#1T, the second emergency signal input unit 350#2, and the second start indicating lamp 340#2S may be placed on one structure. Accordingly, the structure is easily installed and managed, and a driver or a manager safely inputs the emergency signal.

With this, the wireless charging control apparatus may transmit the emergency state to the electric vehicle 10 or to the vehicle assembly 200 mounted to the electric vehicle 10 (S1740, S1830). Accordingly, a driver can recognize the emergency state through not only the indication unit 340 on the travel charging road, but also the display of the electric vehicle 10, thereby making the traveling safer.

According to an alternative embodiment of the disclosure, the wireless charging control apparatus detects an abnormal state of the ground assembly 100 based on the state information received from the ground assembly 100, and controls the ground assembly 100. In this specification, the abnormal state may refer to a state that a foreign object is present in the ground assembly 100 or a state that living object protection (LOP) is required. Repetitive descriptions to those described with reference to FIGS. 1 to 17 will be omitted.

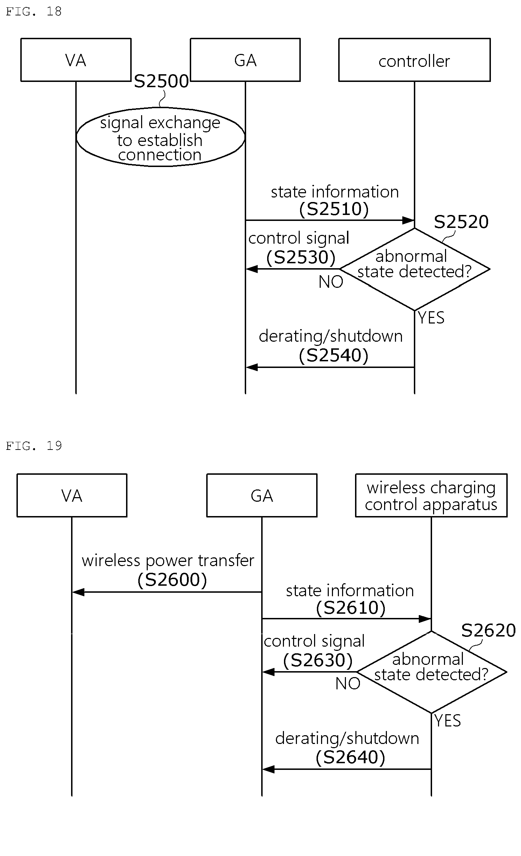

FIG. 18 is a flowchart of a wireless charging control method of a wireless charging system according to still another embodiment of the disclosure.

Referring to FIG. 18, the ground assembly 100 and the vehicle assembly 200 perform signal exchange to establish connection therebetween (S2500). For example, the ground assembly 100 may periodically transmit a ping signal, and the vehicle assembly 200 within the coverage of the ground assembly 100 may respond to the ping signal of the ground assembly 100. With this process, the ground assembly 100 may detect the vehicle assembly 200, and information about the type of ground assembly 100, information about the type of vehicle assembly 200, information about the type of electric vehicle 10 with the vehicle assembly 200, information about the amount of power required by the electric vehicle 10, information about the amount of power feedable by the ground assembly 100 may be exchanged between the ground assembly 100 and the vehicle assembly 200.

Next, the ground assembly 100 transmits the state information to the wireless charging control apparatus (S2510). Here, the state information includes at least one of the temperature, temperature change rate, impedance, current, voltage, power, and coupling coefficient of the ground assembly 100. To this end, the ground assembly 100 may further include a sensor unit (not shown) for detecting the temperature of the ground assembly 100 or around the ground assembly 100. Alternatively, the ground assembly 100 may further include a timer (not shown). The impedance may refer to impedance on the side of the first control circuit 120. The current, the voltage and the power may refer to the current, the voltage and the power on the side of the transmission coil 110. The coupling coefficient may refer to a coupling coefficient between the transmitting coil 110 and the receiving coil 210.

In this case, the state information may include the state information about the ground assembly 100 before being connected to the vehicle assembly 200 after applying the first power to the ground assembly 100. In other words, the state information may include the state information about the ground assembly 100 before transferring the power for the wireless charging to the vehicle assembly 200 after applying the first power to the ground assembly 100. Here, the state after the first power is applied to the ground assembly 100 and before the power for wireless charging is transferred to the vehicle assembly 200 may be referred to as a no-load state or a pre-power state.

Next, the wireless charging control apparatus detects the abnormal state based on the state information received from the ground assembly 100 (S2520). The abnormal state may refers to a state that a foreign object (FO) or a living object (LO) is present on the ground assembly 100. When a foreign object is present on the ground assembly 100, not only the efficiency of wireless power transfer decreases, but also an accident such as fire and harm to living things may occur.

To this end, the wireless charging control apparatus may compare the state information received from the ground assembly 100 with the normal state information. Here, the normal state information may include information of when the ground assembly 100 is in the normal state, for example, information about the state where the foreign object or LO is not present. The normal state information may be previously stored in the wireless charging control apparatus, or may be received from the surrounding ground assembly 100. The normal state information may include at least one of the temperature, temperature change rate, impedance, current, voltage, power and coupling coefficient of when the ground assembly 100 is in the normal state.

For example, when a foreign object such as a metal affected by a magnetic field is present on the ground assembly 100 or around the ground assembly 100, the temperature of the ground assembly 100 or around the ground assembly 100 may excessively rise, or the temperature change rate of the ground assembly 100 or around the ground assembly 100 may become excessively high. Further, when a foreign object such as a metal is present on the ground assembly 100 or around the ground assembly 100, the power may be transferred from the ground assembly 100 to the foreign object.

Accordingly, when the temperature received from the ground assembly 100 is out of a predetermined temperature range, when the temperature change rate received from the ground assembly 100 is out of a predetermined temperature change rate range, when the impedance received from the ground assembly 100 is out of a predetermined impedance range, when at least one of the current, voltage and power received from the ground assembly 100 is out of at least one of predetermined current, voltage and power ranges, or when the coupling coefficient received from the ground assembly 100 is out of a predetermined coupling coefficient range, it may be identified that the ground assembly 100 is in the abnormal state.

When the abnormal state of the ground assembly 100 is not detected, the wireless charging control apparatus transmits a control signal to proceed with the wireless charging to the ground assembly 100 (S2530). In other words, the second power higher than the first power is applied to the ground assembly 100. Accordingly, the power is transferred wirelessly from the transmission coil 110 of the ground assembly 100 to the reception coil 210 of the vehicle assembly 200.

When the abnormal state of the ground assembly 100 is detected, the wireless charging control apparatus derates or shuts down the ground assembly 100 (S2540). Here, the derating may cause the power applied to the transmission coil 110 of the ground assembly 100 to be lower than the first power. Further, the shutdown may cause the power not to be applied to the transmission coil 110 of the ground assembly 100.

When a predetermined time elapses after the derating or shutdown, steps S2500 to S2520 may be performed again. When the abnormal state, for example, the state where a foreign object is present on the ground assembly 100 is removed, step S2530 may proceed. On the other hand, when the abnormal state is still not removed, the wireless charging control apparatus may identify that repair is required, and notify the management server (not shown) of this state. In addition, when the derating or shutdown is performed, the vehicle or user may be notified of the derating or shutdown and guided to make a choice to stop charging or move.

FIG. 19 is a flowchart of a wireless charging control method of a wireless charging system according to still another embodiment of the disclosure. Below, for convenience of description, repetitive descriptions to those described with reference to FIG. 18 will be omitted.

Referring to FIG. 19, the ground assembly 100 wirelessly transmits the power to the vehicle assembly 200 (S2600). To this end, the ground assembly 100 and the vehicle assembly 200 are connected in the state where the first power is applied to the ground assembly 100. After the connection is established, the ground assembly 100 supplies the second power higher than the first power to the vehicle assembly 200.

With this, the ground assembly 100 transmits the state information to the wireless charging control apparatus (S2610). Here, the state information includes at least one of the temperature, temperature change rate, impedance, current, voltage, power and coupling coefficient of the ground assembly 100. Here, the state information may refer to state information of when the ground assembly 100 supplies the second power higher than the first power to the vehicle assembly 200.

Next, the wireless charging control apparatus detects the abnormal state based on the state information received from the ground assembly 100 (S2620). The abnormal state may refer to the state where a foreign object (FO) is present on the ground assembly 100.

When the abnormal state of the ground assembly 100 is not detected, the wireless charging control apparatus transmits a control signal to continue the wireless charging to the ground assembly 100 (S2630). Accordingly, the power is transferred wirelessly from the transmission coil 110 of the ground assembly 100 to the reception coil 210 of the vehicle assembly 200.

When the abnormal state of the ground assembly 100 is detected, the wireless charging control apparatus derates or shuts down the ground assembly 100 (S2640). Here, the derating may cause the power applied to the transmission coil 110 of the ground assembly 100 to be lower than the second power. Further, the shutdown may cause the power not to be applied to the transmission coil 110 of the ground assembly 100.

When a predetermined time elapses after the derating or shutdown, steps S2610 to S2620 may be performed again. When the abnormal state, for example, the state where a foreign object is present on the ground assembly 100 is removed, step S2630 may proceed. On the other hand, when the abnormal state is still not removed, the wireless charging control apparatus may identify that repair is required, and notify the management server (not shown) of this state. In addition, when the derating or shutdown is performed, the vehicle or user may be notified of the derating or shutdown and guided to make a choice to stop charging or move

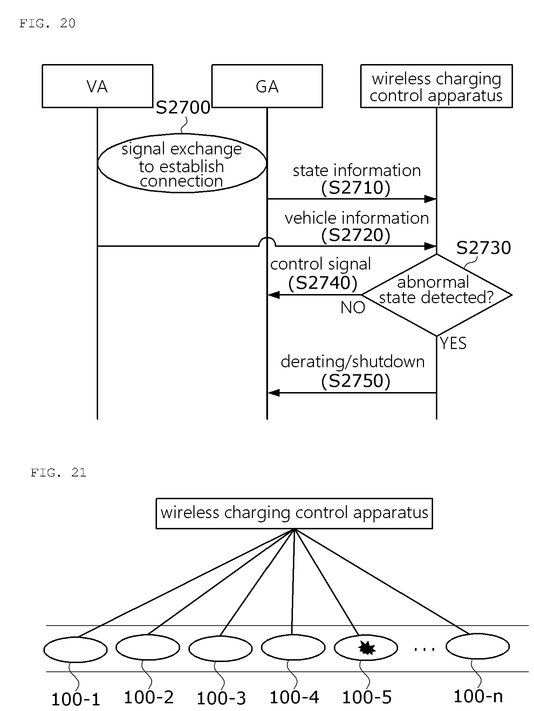

FIG. 20 is a flowchart of a wireless charging control method of a wireless charging system according to still another embodiment of the disclosure. Below, for convenience of description, repetitive descriptions to those described with reference to FIG. 18 will be omitted.

Referring to FIG. 20, the ground assembly 100 and the vehicle assembly 200 perform signal exchange to establish connection (S2700).

Next, the ground assembly 100 transmits the state information to the wireless charging control apparatus (S2710). Here, the state information includes at least one of the temperature, temperature change rate, impedance, current, voltage, power, and coupling coefficient of the ground assembly 100.

With this, the vehicle assembly 200 transmits the vehicle information to the wireless charging control apparatus (S2720). Here, the vehicle information may include at least one of the identification information, current, voltage and the power of the vehicle assembly 200. Here, the current, voltage and power of the vehicle assembly 200 may be the current, voltage and power on the side of the reception coil 210.

Next, the wireless charging control apparatus detects the abnormal state based on the state information received from the ground assembly 100 and the vehicle information received from the vehicle assembly 200 (S2730). The abnormal state may refer to the state where a foreign object (FO) is present on the ground assembly 100.

When the abnormal state of the ground assembly 100 is not detected, the wireless charging control apparatus transmits a control signal to proceed with the wireless charging to the ground assembly 100 (S2740). In other words, the second power higher than the first power is applied to the ground assembly 100. Accordingly, the power is transmitted wirelessly from the transmission coil 110 of the ground assembly 100 to the reception coil 210 of the vehicle assembly 200.

When the abnormal state of the ground assembly 100 is detected, the wireless charging control apparatus derates or shuts down the ground assembly 100 (S2750). Here, the derating may cause the power applied to the transmission coil 110 of the ground assembly 100 to be lower than the first power. Further, the shutdown may cause the power not to be applied to the transmission coil 110 of the ground assembly 100.

When a predetermined time elapses after the derating or shutdown, steps S2700 to S2730 may be performed again. When the abnormal state, for example, the state where a foreign object is present on the ground assembly 100 is removed, step S2740 may proceed. On the other hand, when the abnormal state is still not removed, the wireless charging control apparatus may identify that repair is required, and notify the management server (not shown) of this state. In addition, when the derating or shutdown is performed, the vehicle or user may be notified of the derating or shutdown and guided to make a choice to stop charging or move.

Meanwhile, the wireless charging system according to an embodiment of the disclosure and the wireless charging control method thereof may be applied even when the plurality of ground assemblies are arranged sequentially.

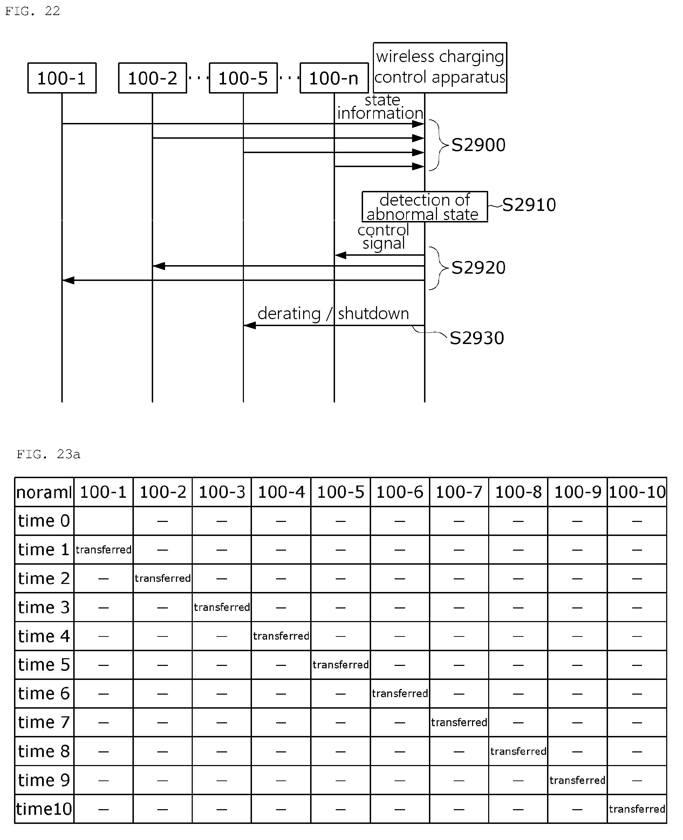

FIG. 21 is a diagram showing a condition that a plurality of ground assemblies are arranged in sequence on a travel route of an electric vehicle, and FIG. 22 is a flowchart of a wireless charging control method of a wireless charging system according to an embodiment of the disclosure under the condition of FIG. 21.

Referring to FIG. 21, within the coverage of the wireless charging control apparatus, the plurality of ground assemblies 100-1, 100-2, 100-3, 100-4, 100-5, ..., 100-n are arranged in sequence on the travel route of the electric vehicle 10. Here, it will be described by way of example that a foreign object is present on one 100-5 of the plurality of ground assemblies.

Referring to FIG. 22, the plurality of ground assemblies 100-1, 100-2, 100-3, 100-4, 100-5, ..., 100-n arranged in sequence transmit their own state information to the wireless charging control apparatus (S2900). Here, the state information includes at least one of the temperature, temperature change rate, impedance, current, voltage, power and coupling coefficient of each of the ground assemblies 100-1, 100-2, 100-3, 100-4, 100-5, ..., 100-n.

The wireless charging control apparatus detects the abnormal state of each ground assembly based on the state information received from the plurality of ground assemblies 100-1, 100-2, 100-3, 100-4, 100-5, ..., 100-n (S2910).

To this end, the wireless charging control apparatus may compare each state information received from the plurality of ground assemblies 100-1, 100-2, 100-3, 100-4, 100-5, ..., 100-n with the normal state information. Here, the normal state information may include at least one of the temperature, temperature change rate, impedance, current, voltage, power and coupling coefficient of when there is no foreign object on the ground assembly 100 under no-load conditions.

For example, when the temperature received from the plurality of ground assemblies 100-1, 100-2, 100-3, 100-4, 100-5, ..., 100-n is out of a predetermined temperature range, when the temperature change rate is out of a predetermined temperature change rate range, the impedance is out of a predetermined impedance range, when at least one among the current, voltage and power is out of at least one among predetermined current, voltage and power ranges, or when the coupling coefficient is out of a predetermined coupling coefficient range, the corresponding ground assembly may be identified to be in the abnormal state.

The wireless charging control apparatus transmits a control signal to proceed with the wireless charging to the ground assemblies in which the abnormal states are not detected among the plurality of ground assemblies 100-1, 100-2, 100-3, 100-4, 100-5, ..., 100-n (S2920), and derates or shuts down the ground assembly in which the abnormal state is detected (S2930).

Meanwhile, when the electric vehicle 10 is traveling on the ground assembly 100-1 under the condition of FIG. 21, the vehicle assembly 200 mounted to the electric vehicle 10 provides the vehicle information to the wireless charging control apparatus. The wireless charging control apparatus may transmit the vehicle information received from the vehicle assembly 200 and the control signal for the wireless charging to the ground assemblies 100-2, 100-3, 100- 4, and 100-5 to be passed by the electric vehicle 10. Accordingly, the ground assemblies 100-2, 100-3, 100- 4, and 100-5 may prepare in advance for transmitting the power wirelessly to the vehicle assembly 200.

However, when the wireless charging control apparatus detects the abnormal state of the ground assembly 100-5, the wireless charging control apparatus may not transmit the vehicle information received from the vehicle assembly 200 and the control for the wireless charging to the ground assembly 100-5. Accordingly, it is possible to prevent power consumption and temperature rising due to unnecessary wireless charging preparation of the ground assembly 100-5.

Meanwhile, according to an embodiment of the disclosure, the wireless charging control apparatus may identify that the ground assembly, of which the pattern of transmitting the state information is different from those of other ground assemblies, among the plurality of ground assemblies 100-1, 100-2, 100-3, 100-4, 100-5, ..., 100-n is in the abnormal state.

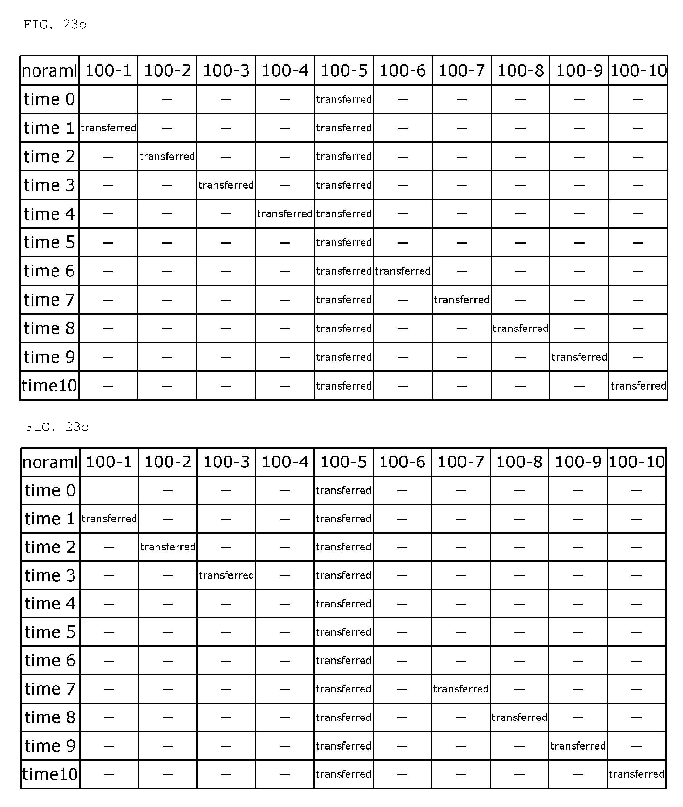

FIG. 23a shows an example that no abnormal states are detected from any ground assembly when state information is received from a plurality of ground assemblies arranged in sequence, and FIGS. 23b to 23e show examples that an abnormal state is detected from a ground assembly 100-5.

Referring to FIG. 23a, when the state information is sequentially received in chronological order from the plurality of ground assemblies arranged in sequence, the wireless charging control apparatus may detect no abnormal states on the travel route of the electric vehicle 10.

On the other hand, referring to FIGS. 23b and 23c, when the state information is continuously received from a specific ground assembly 100-5 while the state information is sequentially received in chronological order from the plurality of ground assemblies arranged in sequence, the wireless charging control apparatus may identify that the ground assembly 100-5 is in the abnormal state.

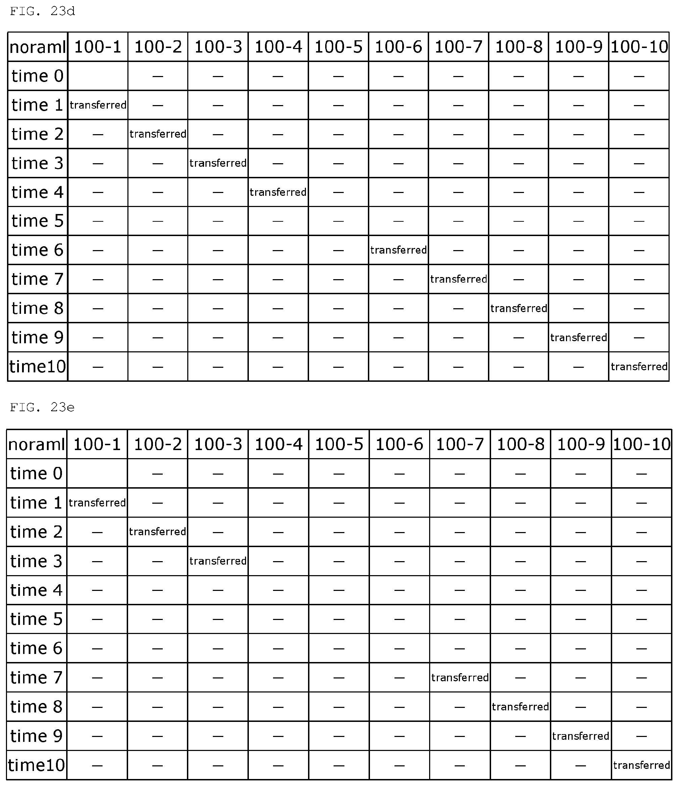

Further, referring to FIGS. 23d and 23e, when the state information is not continuously received from a specific ground assembly 100-5 while the state information is sequentially received in chronological order from the plurality of ground assemblies arranged in sequence, the wireless charging control apparatus may identify that the ground assembly 100-5 is in the abnormal state.

For example, when an accident occurs on the ground assembly 100-5 and the electric vehicle 10 takes a detour around the ground assembly 100-5, the ground assembly 100-5 does not transmit the state information to the charging control apparatus.

According to an embodiment of the disclosure, the wireless charging control apparatus may identify that the ground assembly, of which the temperature information is different from that of other ground assemblies, among the plurality of ground assemblies 100-1, 100-2, 100-3, 100-4, 100-5, ..., 100-n is in the abnormal state.

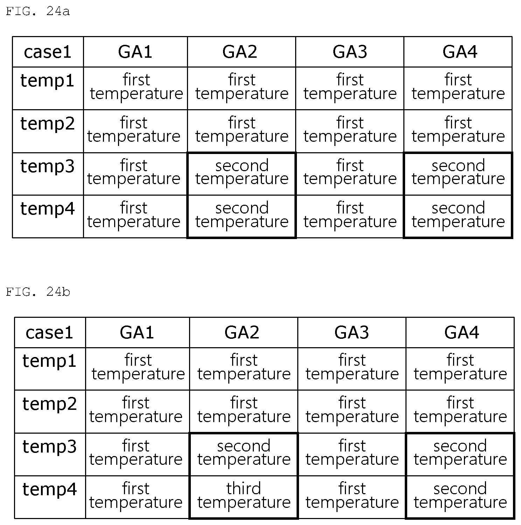

FIGS. 24a and 24b show examples that the wireless charging control apparatus receives temperature information from first to fourth ground assemblies GA1, GA2, GA3 and GA4 in a state that the first to fourth ground assemblies GA1, GA2, GA3 and GA4 are arranged. The first to fourth ground assemblies may not be arranged in sequence, but may be a plurality of ground assemblies arranged within a parking lot.

Referring to FIG. 24a, when the wireless charging control apparatus receives the state information including "first temperature" from the first to fourth ground assemblies GA1, GA2, GA3 and GA4 and "the first temperature" is room temperature, the wireless charging control apparatus may identify that the first to fourth ground assemblies GA1, GA2, GA3 and GA4 are in the normal state. When some ground assemblies GA2 and GA4 among the first to fourth ground assemblies GA1, GA2, GA3 and GA4 transmit the state information including "second temperature", which is higher than those of the surrounding ground assemblies GA1 and GA3, to the wireless charging control apparatus, the wireless charging control apparatus identifies whether "the second temperature" is within a temperature range of a charging state, and continues to proceed with the procedure when it is identified that "the second temperature" is within the temperature range of the charging state.

Referring to FIG. 24b, some ground assemblies GA2 and GA4 among the first to fourth ground assemblies GA1, GA2, GA3 and GA4 transmit the state information including "second temperature", which is higher than those of the surrounding ground assemblies GA1 and GA3, to the wireless charging control apparatus, the wireless charging control apparatus identifies whether "the second temperature" is within a temperature range of a charging state, and continues to proceed with the procedure when it is identified that "the second temperature" is within the temperature range of the charging state. When the ground assembly GA2 transmits the state information including "third temperature" higher than "the second temperature", which is the temperature of the charging state, to the wireless charging control apparatus, the wireless charging control apparatus may identify that the ground assembly GA2 is in the abnormal state.

According to an embodiment of the disclosure, the plurality of ground assemblies GA1, GA2, GA3 and GA4 may transmit a temperature range, rather than the specific temperature, to the wireless charging control apparatus. The wireless charging control apparatus may store a temperature range of an uncharged state, a temperature range of a charged state, and a temperature range of an abnormal state in advance, and identify whether the ground assembly is in an uncharged state, a charged state, or an abnormal state based on the temperature range received from the plurality of ground assemblies GA1, GA2, GA3 and GA4.

According to an embodiment of the disclosure, wireless charging control may be applied in the no-load state or in the charging state.

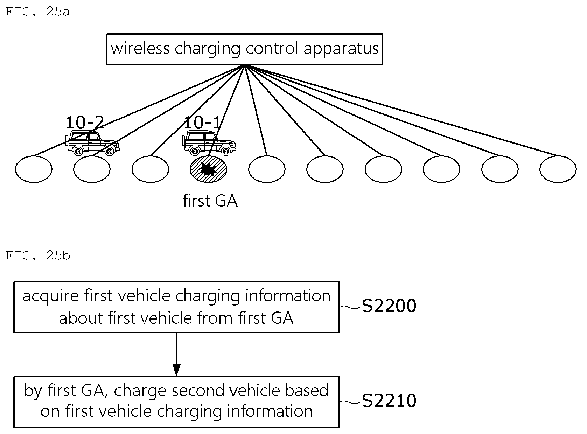

FIG. 25 shows an example where a wireless charging control method according to an embodiment of the disclosure is applied.

Referring to FIG. 25b, when a first vehicle 10-1 precedes a second vehicle 10-2 and passes a first GA on which a foreign object is present and the second vehicle 10-2 follows the first vehicle 10-1 as shown in FIG. 25a, the wireless charging control apparatus receives the first vehicle charging information based on the charging of the first vehicle 10-1 from the first GA (S2200). Here, the first GA may charge the first vehicle 10-1 with second power. The first vehicle charging information may include impedance measured from the first GA, the voltage or current of the first GA, and the voltage, current, efficiency or power of a first VA mounted to the first vehicle 10-1 while the first vehicle 10-1 is being charged.

Next, when the second vehicle 10-2 passes the first GA, the wireless charging control apparatus charges the second vehicle 10-2 based on the first vehicle charging information acquired in step S2200 (S2210). For example, when it is identified that the first GA is in the abnormal state based on the first vehicle charging information, the first GA performs the derating and charges the second vehicle 10-2 with the first power lower than the second power.

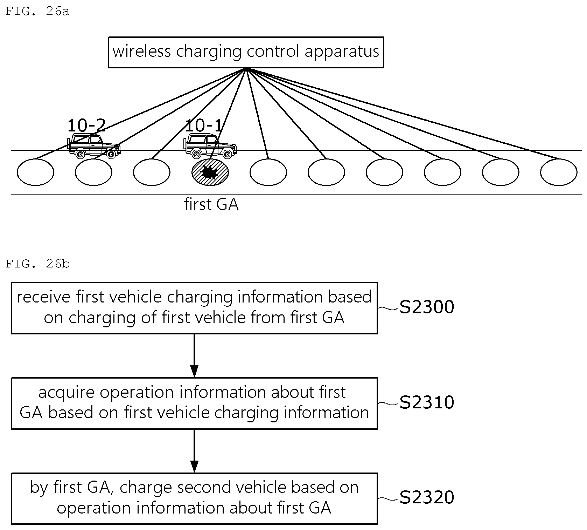

FIG. 26 shows an example where a wireless charging control method according to another embodiment of the disclosure is applied.

Referring to FIG. 26b, when a first vehicle 10-1 precedes a second vehicle 10-2 and passes a first GA on which a foreign object is present and the second vehicle 10-2 follows the first vehicle 10-1 as shown in FIG. 26a, the wireless charging control apparatus receives the first vehicle charging information based on the charging of the first vehicle 10-1 from the first GA (S2300). Here, the first GA may charge the first vehicle 10-1 with second power. The first vehicle charging information may include impedance measured from the first GA, the voltage or current of the first GA, and the voltage, current, efficiency or power of a first VA mounted to the first vehicle 10-1 while the first vehicle 10-1 is being charged.

Next, the wireless charging control apparatus acquires operation information about the first GA based on the first vehicle charging information (S2310). Here, the operation information about the first GA refers to information that indicates whether the first GA operates in the abnormal state or the normal state. For example, when the impedance measured in the first GA is out of a normal range, when the voltage or current of the first GA is out of a normal range, when the voltage, current, efficiency or power of the first VA is out of a normal range, it may be identified that the first GA operates in the abnormal state. When the impedance measured in the first GA is within the normal range, when the voltage or current of the first GA is within the normal range, or when the voltage, current, efficiency or power of the first VA is within the normal range, it may be identified that the first GA operates in the normal state.

Next, when the second vehicle 10-2 passes the first GA, the second vehicle 10-2 is charged based on the operation information about the first GA acquired in step S2310 (S2320). For example, when it is identified that the first GA is in the abnormal state, the first GA performs the derating and charges the second vehicle 10-2 with the first power lower than the second power.

Here, before performing step S2320, the first GA may further transmit second vehicle charging information based on the charging of the second vehicle 10-2 to the wireless charging control apparatus, and in step S2320, the wireless charging control apparatus may charge the second vehicle 10-2 based on the second vehicle charging information.

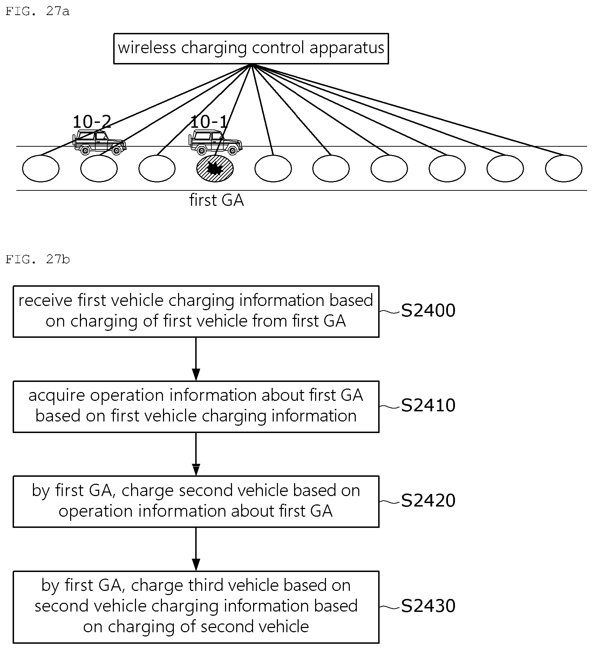

FIG. 27 shows an example where a wireless charging control method according to still another embodiment of the disclosure is applied.

Referring to FIG. 27b, when a first vehicle 10-1 precedes a second vehicle 10-2 and passes a first GA on which a foreign object is present and the second vehicle 10-2 follows the first vehicle 10-1 as shown in FIG. 27a, the same description as step S2300 to step S2320 may be applied to step S2400 to step S2420. Although not shown, the first GA may further transmit second vehicle charging information based on the charging of the second vehicle 10-2 to the wireless charging control apparatus.

When the third vehicle 10-3 following the second vehicle 10-2 passes the first GA, the third vehicle (not shown) is charged based on the second vehicle charging information (S2430). For example, the wireless charging control apparatus may acquire the operation information about the first GA based on the second vehicle charging information, and the first GA charges the third vehicle with the higher second power when the operation information about the first GA indicates a normal state.

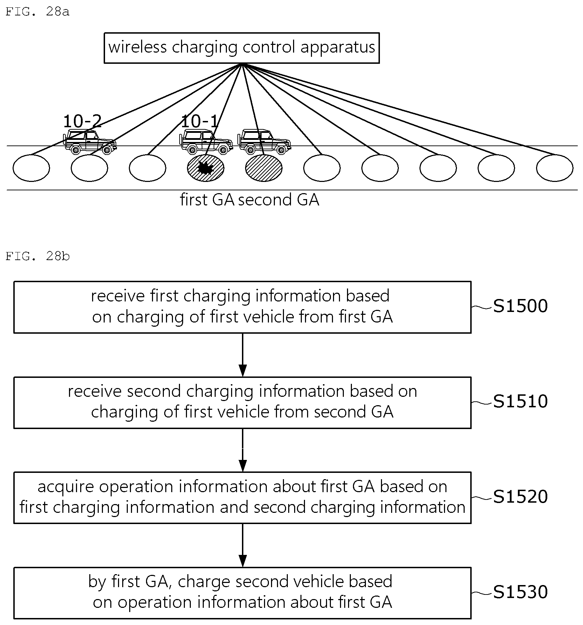

FIG. 28 shows an example where a wireless charging control method according to still another embodiment of the disclosure is applied.

Referring to FIG. 28b, when a first vehicle 10-1 precedes a second vehicle 10-2 and passes a first GA on which a foreign object is present and the second vehicle 10-2 follows the first vehicle 10-1 as shown in FIG. 28a, the wireless charging control apparatus receives the first charging information based on the charging of the first vehicle 10-1 from the first GA (S1500). Here, the first GA may charge the first vehicle 10-1 with the second power. The first charging information may include the impedance measured in the first GA, the voltage or current of the first GA, and the voltage, current, efficiency or power of the first VA mounted to the first vehicle 10-1 during the charging of the first vehicle 10-1.

Then, the wireless charging control apparatus receives second charging information based on the charging of the first vehicle 10-1 from a second GA, i.e., another GA on the route through which the first vehicle 10-1 passes (S1510). Here, the second GA may charge the first vehicle 10-1 with the second power. The second charging information may include the impedance measured in the second GA, the voltage or current of the second GA, and the voltage, current, efficiency or power of the first VA mounted to the first vehicle 10-1 during the charging of the first vehicle 10-1.

Next, the wireless charging control apparatus acquires operation information about the first GA based on the first charging information transmitted by the first GA and the second charging information transmitted by the second GA (S1520). Here, the operation information about the first GA refers to information indicating whether the first GA operates in the abnormal state or the normal state. For example, the wireless charging control apparatus may detect the abnormal state of the first GA by comparing the first charging information transmitted by the first GA and the second charging information transmitted by the second GA.

Next, when the second vehicle 10-2 passes the first GA, the second vehicle 10-2 is charged based on the operation information about the first GA acquired in step S1520 (S1530). For example, when the first GA operates in the abnormal state, the first GA may perform the derating and charge the second vehicle 10-2 with the first power lower than the second power.

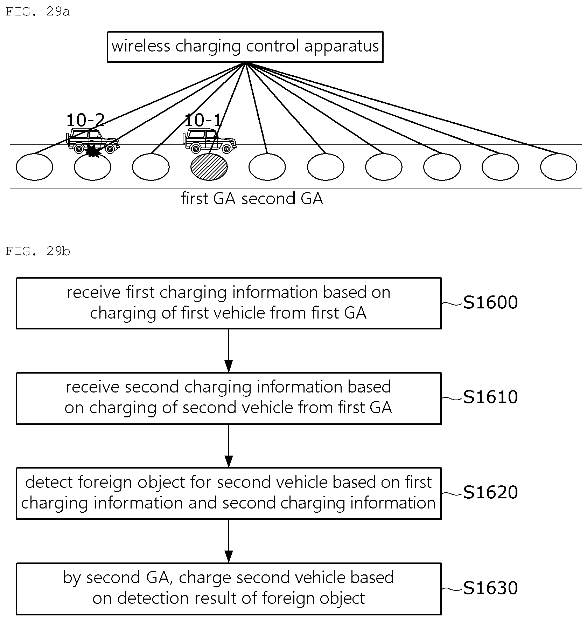

FIG. 29 shows an example where a wireless charging control method according to still another embodiment of the disclosure is applied.

Referring to FIG. 29b, when a first vehicle 10-1 precedes a second vehicle 10-2 and passes a first GA and the second vehicle 10-2 follows the first vehicle 10-1 as shown in FIG. 29a, the wireless charging control apparatus receives the first charging information based on the charging of the first vehicle 10-1 from the first GA (S1600). Here, the first GA may charge the first vehicle 10-1 with the second power. The first charging information may include the impedance measured in the first GA, the voltage or current of the first GA, and the voltage, current, efficiency or power of the first VA mounted to the first vehicle 10-1 during the charging of the first vehicle 10-1.

Then, the wireless charging control apparatus receives second charging information based on the charging of the second vehicle 10-2 following the first vehicle 10-1 from the first GA, i.e., another GA on the route through which the first vehicle 10-1 passes (S1610). Here, the first GA may charge the second vehicle 10-2 with the second power. The second charging information may include the impedance measured in the first GA, the voltage or current of the first GA, and the voltage, current, efficiency or power of the second VA mounted to the second vehicle 10-2 during the charging of the second vehicle 10-2.

Next, the wireless charging control apparatus detects a foreign object for the second vehicle 10-2 based on the first charging information and the second charging information transmitted from the first GA (S1620). For example, when the first charging information indicates that the first GA operates in the normal state, but the second charging information indicates that the first GA operates in the abnormal state, the wireless charging control apparatus may identify that the foreign object is not present in the first GA but attached to the second vehicle 10-2.

Then, when the second vehicle 10-2 passes the second GA, the second vehicle 10-2 is charged based on the foreign object on the second vehicle 10-2 detected in step S1520 (S1630). In other words, the second GA may perform the derating and charge the second vehicle 10-2 with the first power lower than the second power.

Although exemplary embodiments of the disclosure have been described, various modifications and changes in the disclosure can be made by those skilled in the art without departing from the spirit and scope of the disclosure defined in the appended claims.

## Claims

1. A wireless charging control method of a wireless charging control apparatus for an electric vehicle being traveling, the wireless charging control method comprising:
by a first controller, detecting entry of the electric vehicle into a first area;
by the first controller, acquiring vehicle information about the electric vehicle;
by the first controller, transmitting the vehicle information of the electronic vehicle to a second controller;
by the first controller, controlling power feeding of a plurality of ground assemblies placed in the first area; and
by the second controller, controlling power feeding of a plurality of ground assemblies placed in a second area,
wherein each of the controlling of the power feeding by the first controller and the controlling of the power feeding by the second controller comprises a first input voltage section, a second input voltage section, and a third input voltage section, which are performed in sequence,
an input voltage increases over time in the first input voltage section, and an input voltage decreases over time in the third input voltage section, and
the first input voltage section, the second input voltage section, and the third input voltage section of the second controller follow the first input voltage section, the second input voltage section, and the third input voltage section of the first controller.

2. The wireless charging control method of claim 1, wherein a portion of the second input voltage section of the first controller overlaps with a portion of the first input voltage section of the second controller.

3. The wireless charging control method of claim 2, wherein at least one among a start time of the first input voltage section of the second controller, a start time of the second input voltage section of the second controller, a maintenance period of the second input voltage section of the second controller, and a start time of the third input voltage section of the second controller is set based on the vehicle information.

4. The wireless charging control method of claim 2, wherein a start time of the first input voltage section of the second controller overlaps with the first input voltage section of the first controller or the second input voltage section of the first controller.

5. The wireless charging control method of claim 4, wherein a start time of the second input voltage section of the second controller overlaps with the second input voltage section of the first controller.

6. The wireless charging control method of claim 2, wherein a first input voltage in the second input voltage section of the first controller is higher than a second input voltage in the first input voltage section of the second controller.

7. The wireless charging control method of claim 1, wherein the vehicle information comprises speed information about the electric vehicle.

8. The wireless charging control method of claim 1, wherein
the first area and the second area comprise an overlapping area therebetween, and
in the transmitting, the first controller transmits the vehicle information of the electric vehicle to the second controller before the electric vehicle enters the overlapping area.

9. The wireless charging control method of claim 8, wherein
at least one ground assembly is placed within the overlapping area, and
the at least one ground assembly is controlled by the first controller or the second controller.

10. The wireless charging control method of claim 9, wherein the at least one ground assembly is controlled by the first controller upon a first state of a switch connected between the at least one ground assembly and the first and second controllers, and the at least one ground assembly is controlled by the second controller upon a second state of the switch.
